# EUROPEAN PATENT SPECIFICATION

(11) **EP 2 916 579 B1**
(45) Date of publication and mention of the grant of the patent: **04.09.2019**
(21) Application number: 13851745.3
(22) Date of filing: 25.07.2013
(51) Int. Cl.: H04W 16/32, H04W 72/04

(54) **COMMUNICATION CONTROL DEVICE, TERMINAL DEVICE, PROGRAM, AND COMMUNICATION CONTROL METHOD**
KOMMUNIKATIONSSTEUERUNGSVORRICHTUNG, ENDGERÄT UND KOMMUNIKATIONSSTEUERUNGSVERFAHREN
DISPOSITIF DE COMMANDE DE COMMUNICATION, DISPOSITIF TERMINAL, PROGRAMME, ET PROCÉDÉ DE COMMANDE DE COMMUNICATION

(30) Priority: 30.10.2012 JP 2012238812
(43) Date of publication of application: 09.09.2015
(60) Divisional application: 19175867.1
(73) Proprietor: Sony Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2013/070209
(87) International publication number: WO 2014/069057

(56) References cited:
- JP-A- 2011 166 710
- JP-A- 2011 176 722
- US-A1- 2011 170 496
- US-A1- 2012 257 552
- NTT DOCOMO: "Views on TM9 and CA Based Approaches for Rel-11 CoMP", 3GPP DRAFT; R1-120403 COMP CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562896, [retrieved on 2012-01-31]
- NOKIA SIEMENS NETWORKS ET AL: "Downlink interference mitigation for HetNet CB-ICIC", 3GPP DRAFT; R1-124169, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Diego, United States; 20121008 - 20121012 29 September 2012 (2012-09-29), XP050662078, Retrieved from the Internet: URL:http://www.3gpp.org/ftp/tsg_ran/WG1_RL 1/TSGR1_70b/Docs/ [retrieved on 2012-09-29]
- NTT DOCOMO: 'Views on TM9 and CA Based Approaches for Rel-11 CoMP' 3GPP TSG-RAN WG1#68 R1-120403 06 February 2012, XP050562896 Retrieved from the Internet: <URL:http://www.3gpp.org/ftp/tsg_ran/WG1_RL 1/TSGR1_68/Docs/R1-120403.zip>

## Description

### Technical Field

The present disclosure relates to a communication control device, a terminal device, a program, and a communication control method.

### Background Art

Currently, increasing data traffic in cellular systems caused by spread of smartphones is a concern. For this reason, expanding communication capacities of the cellular systems become more and more important for each cellular business operator.

In order to expand the communication capacities, the business operators dispose, for example, small cells such as pico cells and femto cells within macro cells. Accordingly, the business operators can gain more communication capacities from advantages of cell splitting. Various techniques for using such small cells have been under review.

The paper NTT DOCOMO "Views on TM9 and CA based approaches for Rel-11 CoMP", 3GPP draft, R1-120403 CoMP CA, 3rd generation partnership project, Mobile Competence Center, 650, Route de Lucioles, F-06921 Sophia-Antipolis Cedex, France, VLRAN WG1, No. Dresden, Germany, 20120206-20120210, 31. Januar 2012 discloses an approach relating to a coordinated multipoint transmission scheme
Document US 2011/170496 discloses a method for managing control channel interference in an overlap of macro NodeB with low power node scenario.

For example, Patent Literature 1 discloses a technique of suppressing interference by appropriately adjusting output power of terminal devices and a base station using a collaboration manager when a frequency band is shared between a macro cell and a small cell.

### Citation List

### Patent Literature

Patent Literature 1: JP 2011-211369A

### Summary of Invention

### Technical Problem

Meanwhile, there may be a scenario in which the same frequency band is not simultaneously used by both a macro cell and a small cell, and separate frequency bands are used (at least simultaneously) between a macro cell and a small cell. However, in this case, a terminal device may become connected with both a base station of a macro cell and a base station of a small cell (for example, an RRC connected state of a Long Term Evolution (LTE)). In other words, a terminal device has to perform, for example, dozens of transactions with both a macro cell and a small cell in order to become connected with a base station of a macro cell as well as a base station of a small cell. As a result, a burden on a terminal device is likely to increase.

In this regard, it is desirable to provide a mechanism capable of further reducing a load on a terminal device related to wireless communication in a macro cell and a small cell.

### Solution to Problem

The invention is set out in the appended set of claims. According to the present disclosure, there is provided a communication control device including a control unit configured to control wireless communication by a terminal device capable of performing wireless communication using one primary frequency band and one or more secondary frequency bands when the terminal device is located within a macro cell. When the terminal device is located within a small cell overlapped by the macro cell partially or entirely and the macro cell, the control unit controls the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.

According to the present disclosure, there is provided a program for causing a computer to function as a control unit configured to control wireless communication by a terminal device capable of performing wireless communication using one primary frequency band and one or more secondary frequency bands when the terminal device is located within a macro cell. When the terminal device is located within a small cell overlapped by the macro cell partially or entirely and the macro cell, the control unit controls the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.

According to the present disclosure, there is provided a communication control method including controlling wireless communication by a terminal device capable of performing wireless communication using one primary frequency band and one or more secondary frequency bands when the terminal device is located within a macro cell. The controlling of the wireless communication by the terminal device includes, when the terminal device is located within a small cell overlapped by the macro cell partially or entirely and the macro cell, controlling the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.

According to the present disclosure, there is provided a communication control device including a control unit configured to control wireless communication in a small cell overlapped by a macro cell partially or entirely by a terminal device capable of performing wireless communication using one primary frequency band and one or more secondary frequency bands when the terminal device is located within the small cell. The control unit controls the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or controls the terminal device in a manner that, when the terminal device is located within the macro cell and the small cell and each of the one or more macro cell frequency bands is used as the secondary frequency band, one of the one or more small cell frequency bands is used as the primary frequency band.

According to the present disclosure, there is provided a program for causing a computer to function as a control unit configured to control wireless communication in a small cell overlapped by a macro cell partially or entirely by a terminal device capable of performing wireless communication using one primary frequency band and one or more secondary frequency bands when the terminal device is located within the small cell. The control unit controls the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or controls the terminal device in a manner that, when the terminal device is located within the macro cell and the small cell and each of the one or more macro cell frequency bands is used as the secondary frequency band, one of the one or more small cell frequency bands is used as the primary frequency band.

According to the present disclosure, there is provided a communication control method including controlling wireless communication in a small cell overlapped by a macro cell partially or entirely by a terminal device capable of performing wireless communication using one primary frequency band and one or more secondary frequency bands when the terminal device is located within the small cell. The controlling of the wireless communication by the terminal device includes controlling the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or controlling the terminal device in a manner that, when the terminal device is located within the macro cell and the small cell and each of the one or more macro cell frequency bands is used as the secondary frequency band, one of the one or more small cell frequency bands is used as the primary frequency band.

According to the present disclosure, there is provided a terminal device including a wireless communication unit configured to perform wireless communication in a macro cell using one or more macro cell frequency bands for wireless communication in the macro cell and perform wireless communication in a small cell overlapped by the macro cell partially or entirely using one or more small cell frequency bands for wireless communication in the small cell, and a control unit configured to use one of one of the one or more macro cell frequency bands and the one or more small cell frequency bands as a primary frequency band and use each of one of the one or more macro cell frequency bands and the one or more small cell frequency bands as a secondary frequency band.

According to the present disclosure, there is provided a communication control method including performing wireless communication in a macro cell using one or more macro cell frequency bands for wireless communication in the macro cell, performing wireless communication in a small cell overlapped by the macro cell partially or entirely using one or more small cell frequency bands for wireless communication in the small cell, and using one of one of the one or more macro cell frequency bands and the one or more small cell frequency bands as a primary frequency band and using each of one of the one or more macro cell frequency bands and the one or more small cell frequency bands as a secondary frequency band.

### Advantageous Effects of Invention

As described above, according to the present disclosure, it is possible to further reduce a load on a terminal device related to wireless communication in a macro cell and a small cell.

### Brief Description of Drawings

FIG. 1 is an illustrative diagram for describing an example of a scenario in which a macro cell and a small cell use different frequency bands.
FIG. 2 is an illustrative diagram for describing a PDCCH arranged for each subframe.
FIG. 3 is an illustrative diagram for describing an example of PCCs of each UE.
FIG. 4 is an illustrative diagram for describing an example of a CC when cross carrier scheduling is not applied.
FIG. 5 is an illustrative diagram for describing an example of a CC when cross carrier scheduling is applied.
FIG. 6 is an illustrative diagram for describing an example of an ePDCCH transmitted for each subframe.
FIG. 7 is an illustrative diagram showing an example of a schematic configuration of a wireless communication system according to an embodiment.
FIG. 8 is a block diagram showing an example of a configuration of a macro eNodeB according to an embodiment.
FIG. 9 is an illustrative diagram for describing a CC utilization example of a UE according to an embodiment.
FIG. 10 is a block diagram showing an example of a configuration of a pico eNodeB according to an embodiment.
FIG. 11 is a block diagram showing an example of a configuration of a UE according to an embodiment.
FIG. 12 is a sequence diagram showing an example of a schematic flow of a communication control process according to an embodiment.
FIG. 13 is an illustrative diagram for describing an example of transmission of a PDCCH according to a first modified example of an embodiment.
FIG. 14 is a sequence diagram showing an example of a schematic flow of a communication control process according to the first modified example of an embodiment.
FIG. 15 is an illustrative diagram for describing an example of an N-CIF according to a second modified example of an embodiment.
FIG. 16 is a sequence diagram showing an example of a schematic flow of a communication control process according to a second modified example of an embodiment.
FIG. 17 is a flowchart illustrating is an example of a schematic flow of a process of deciding an operation of a UE related to a CIF according to a second embodiment of an embodiment.
FIG. 18 is an illustrative diagram for describing an example of transmission of scheduling information according to a third modified example of an embodiment.
FIG. 19 is a sequence diagram showing an example of a schematic flow of a communication control process according to a third modified example of an embodiment.
FIG. 20 is an illustrative diagram for describing an example of downlink assignment information according to a fourth modified example of an embodiment.
FIG. 21 is a flowchart illustrating an example of a schematic flow of a communication control process of a UE according to a fourth modified example of an embodiment.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Preface
   1.1. Wireless communication technology of the 3GPP
   1.2. Technical problem
2. Schematic configuration of a wireless communication system
3. Configurations of respective devices
   3.1. Configuration of a macro eNodeB
   3.2. Configuration of a pico eNodeB
   3.3. Configuration of a UE
4. Process flow
5. Modified examples
   5.1. First modified example
   5.2. Second modified example
   5.3. Third modified example
   5.4. Fourth modified example
6. Conclusion

### <<<1. Preface>>>

First, a wireless communication technology of the 3^{rd} Generation Partnership Project (3GPP) and technical challenges thereof will be described.

### <<1.1. Wireless communication technology of the 3GPP>>

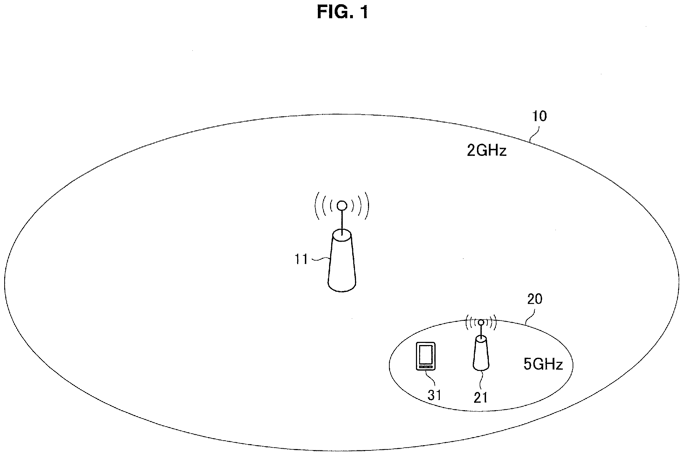

Hereinafter, the wireless communication technology of the 3GPP will be described with reference to FIGS. 1 to 4.

### (Small cell of Release 10)

There is a mention in Release 10 as well as Release 11 of the 3GPP of small cells (to be specific, pico cells). In Release 10 and Release 11, a base station is referred to as an eNodeB, and particularly, an eNodeB of a macro cell is referred to as a macro eNodeB, and an eNodeB of a pico cell is referred to as a pico eNodeB.

A pico cell is partially or entirely overlapped by a macro cell, and for example, a macro eNodeB and a pico eNodeB use the same frequency band. Such a network is referred to as a heterogeneous network (Het-Net). Reducing interference between a macro eNodeB and a pico eNodeB in a Het-Net is an important task, and thus the 3GPP has been vigorously discussed a technology for reducing such interference. For example, providing a subframe that is called an almost blank subframe (ABS) in which most transmissions stop on a macro cell (macro eNodeB) side and the like have been reviewed.

### (Difference between relay station and pico eNodeB of Release 10)

The relay station and the pico eNodeB of Release 10 are independent base stations in common. However, the pico eNodeB and the macro eNodeB are generally connected in a wired manner rather than a wireless manner. Further, there are cases in which the pico eNodeB and the macro eNodeB have the same cell ID.

### (Remote radio head)

There is a remote radio head (RRH) as a form of the pico eNodeB. For example, the RRH mainly includes an analog signal processing unit and an antenna unit, and is extended from the macro eNodeB via an optical fiber. In this case, the macro eNodeB side can be provided with a communication control function for a pico cell.

### (Small cell that is assumed in Release 12)

On the other hand, a scenario in which a macro eNodeB and a pico eNodeB use different frequency bands is expected to be reviewed as a scenario of Release 12. Hereinbelow, this point will be described in more detail with reference to FIG. 1.

FIG. 1 is an illustrative diagram for describing an example of the scenario in which a macro cell and a small cell use different frequency bands. Referring to FIG. 1, a macro cell 10 and a macro eNodeB 11 are shown. In addition, a pico cell 20 that is entirely overlapped by the macro cell 10 and a pico eNodeB 21 are shown. Furthermore, a user equipment (UE) 31 that communicates with the macro eNodeB and the pico eNodeB is shown. On such a network, for example, the macro eNodeB 11 performs wireless communication with the UE 31 using a frequency band of the 2 GHz band within the macro cell 10. In addition, for example, the pico eNodeB 21 performs wireless communication with the UE 31 using a frequency band of the 5 GHz band within the pico cell 20.

### (PDCCH)

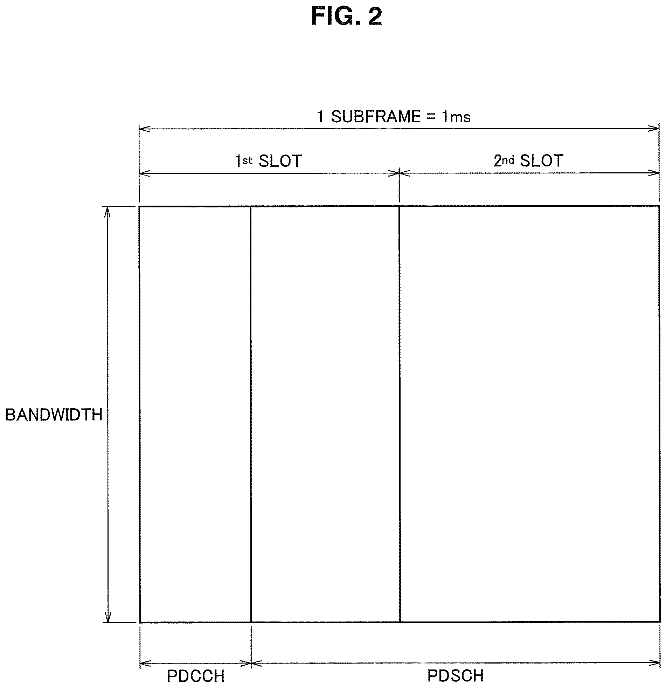

Various control information is transmitted through a Physical Downlink Control CHannel (PDCCH) serving as a control channel. The PDCCH is arranged for each subframe. This point will be more specifically described below with reference to FIG. 2.

FIG. 2 is an illustrative diagram for describing the PDCCH arranged for each subframe. Referring to FIG. 2, radio resources corresponding to one subframe of a frequency band (for example, a component carrier) are illustrated. In other words, in FIG. 2, a bandwidth of a frequency band is indicated in a frequency direction, and one subframe is indicated in a time direction. The bandwidth is a maximum of 20 MHz. One subframe is 1 millisecond (ms). One subframe includes two slots of 0.5 ms, and each slot includes 7 Orthogonal Frequency Division Multiplexing (OFDM) symbols. Further, the first 1 to 3 OFDM symbols of one subframe are the PDCCH, and the remaining symbols are a Physical Downlink Shared Channel (PDSCH).

The most important control information among control information transmitted through the PDCCH is scheduling information. The scheduling information includes a downlink assignment and an uplink grant. The downlink assignment indicates which resource block (RB) among downlink RBs is the RB that a UE should receive. On the other hand, the uplink grant indicates which RB among uplink RBs is the RB that a UE should use in transmission. The scheduling information is decided by a scheduling function (that is, scheduler) of a MAC layer of the eNodeB. The scheduler of the eNodeB acquires channel state information between the eNodeB and the UE, and decides a resource block to be assigned to each UE in view of the channel state information and fairness of a resource assignment to the UE.

### (Blind coding and search space)

The UE decodes the PDCCH in units of Control Channel Elements (CCEs). The UE is not notified of a CCE directed to its own device. Thus, the UE decodes a CCE using an ID (a Cell-Radio Network Temporary Identity (C-RNTI)) of its own device, and detects that the CCE is a CCE directed to its own device when the decoding is successfully performed (there is no Cyclic Redundancy Check (CRC) error). This decoding is referred to as blind decoding. Decoding a number of CCEs through the blind coding increases a load on the UE.

In this regard, the load on the UE is reduced by restricting a blind decoding region for each UE. The restricted region is referred to as a "search space." The PDCCH is delimited by the search space.

### (Carrier aggregation of Release 10)

### - Component carrier

In carrier aggregation of Release 10, up to five component carriers (CCs) are bundled and used in a UE. Each CC is a bandwidth of up to 20 MHz. In carrier aggregation, CCs continuing in a frequency direction are used in some cases and CCs separated in the frequency direction are used in some cases. In carrier aggregation, the CCs to be used can be set for each UE.

### - Primary CC and secondary CC

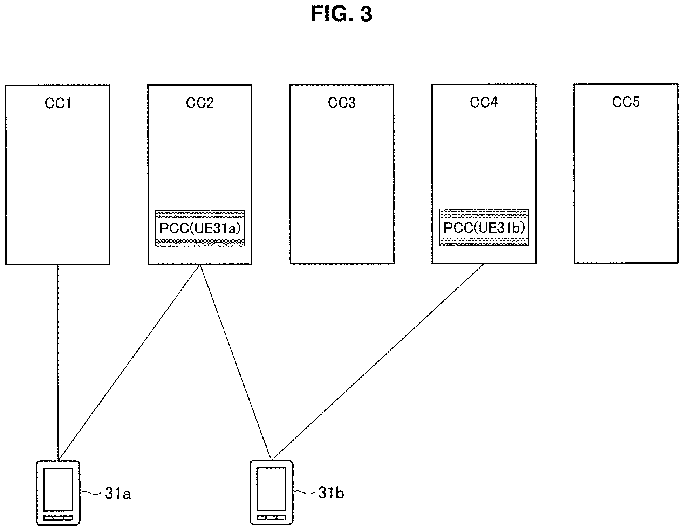

In carrier aggregation, one of the plurality of CCs used by the UE is a special CC. The one special CC is referred to as a primary component carrier (PCC). Of the plurality of CCs, the remaining CCs are referred to as secondary component carriers (SCCs). The PCC can differ for each UE. This point will be described more specifically below with reference to FIG. 3.

FIG. 3 is an explanatory diagram illustrating an example of the PCC of each UE. A UE 31a, a UE 31b, and five CCs 1 to 5 are illustrated in FIG. 3. In this example, the UE 31a uses two CCs, the CC 1 and the CC 2. The UE 31a uses the CC 2 as the PCC. On the other hand, the UE 31b uses two CCs, the CC 2 and the CC 4. The UE 31b uses the CC 4 as the PCC. In this way, each UE can use a different CC as the PCC.

Since the PCC is the most important CC among the plurality of CCs, the CC for which communication quality is the stablest is preferable. Which CC is used as the PCC actually depends the way in which they are installed.

The CC with which a UE initially establishes connection is the PCC in the UE. The SCC is added to the PCC. That is, the PCC is a main frequency band and the SCC is an auxiliary frequency band. The SCC is changed by deleting the existing SCC and adding a new SCC. The PCC is changed in an inter-frequency handover sequence of the related art. In carrier aggregation, a UE may not use only the SCC, but necessarily uses one PCC.

The PCC is also referred to as a primary cell. The SCC is also referred to as a secondary cell.

### - Cross carrier scheduling

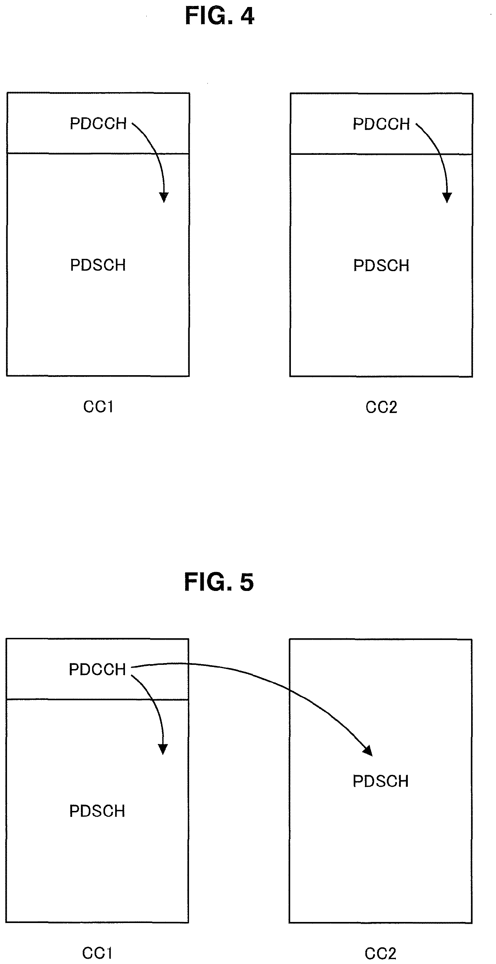

The CCs are classified into a CC having the PDCCH and a CC having no PDCCH. At least the PCC has the PDCCH. When there is no PDCCH in a certain CC, control information (scheduling information) of the CC is transmitted through the PDCCH of another CC. This form is referred to as "cross carrier scheduling." This point will be more specifically described below with reference to FIGS. 4 and 5.

FIG. 4 is an illustrative diagram for describing an example of a CC when no cross carrier scheduling is applied. Referring to FIG. 4, two CCs, a CC1 and a CC2, are illustrated. In this example, since no cross carrier scheduling is applied, both the CC1 and the CC2 have the PDCCH.

FIG. 5 is an illustrative diagram for describing an example of a CC when the cross carrier scheduling is applied. Referring to FIG. 5, two CCs, a CC1 and a CC2, are illustrated. In this example, the cross carrier scheduling is applied, and as a result, there is the PDCCH in the CC1, but there is no PDCCH in the CC2. Further, control information (scheduling information) of the CC2 is transmitted through the PDCCH of the CC1.

### (Search space, DCI, and CIF)

A plurality of pieces of Downlink Control Information (DCI) are present in each search space of the PDCCH. Further, a 3-bit Carrier Identity Field (CIF) is present in the DCI. The CIF designates another CC. In other words, control information of the CC designated by the CIF is present in the DCI.

One CC is necessarily controlled by one CC rather than a plurality of CCs. In other words, control information for one CC is not distributedly arranged in a plurality of CCs but arranged in one CC. The UE is notified of whether or not there is a CIF in a CC through RRC signaling in advance.

### (ePDCCH of Release 11)

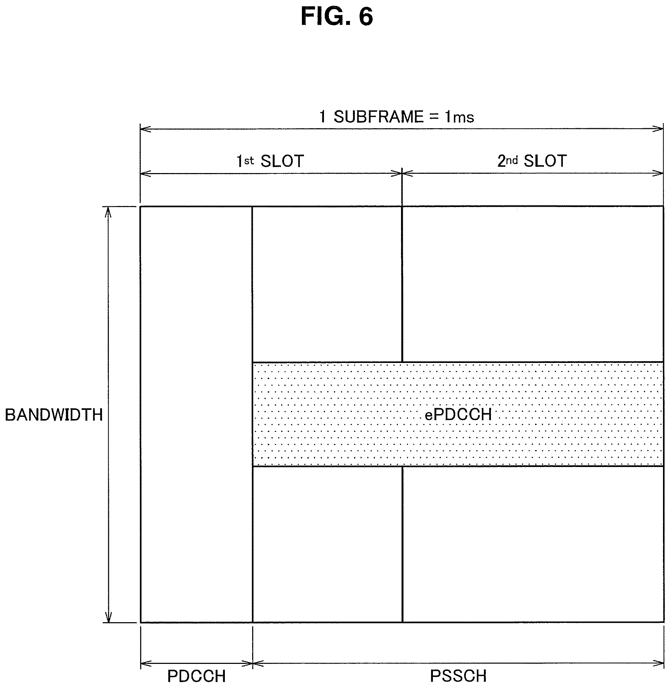

In Release 11, a problem in which there is a shortage of PDCCH regions was highlighted. In this regard, a new control region called an Enhanced PDCCH (ePDCCH) has been employed. The ePDCCH is decided to be arranged in the PDSCH region of the related art. This point will be more specifically described below with reference to FIG. 6.

FIG. 6 is an illustrative diagram for describing an example of an ePDCCH transmitted for each subframe. Referring to FIG. 6, similarly to FIG. 2, a PDCCH region and a PDSCH region according to the related art are illustrated. Further, an ePDCCH is arranged in the PDSCH region of the related art.

### «1.2. Technical problem»

Next, a technical problem related to the above-described technique will be described.

There may be a scenario in which separate frequency bands are (at least simultaneously) used between a macro cell and a pico cell such as a scenario that is expected to be reviewed in Release 12.

However, in this case, the UE typically enters the RRC connected state with both the macro eNodeB and the pico eNodeB. In other words, the UE has to perform dozens of transactions with both a macro cell and a small cell in order to enter the RRC connected state with the pico eNodeB as well as the macro eNodeB. As a result, the burden on the UE is likely to increase.

Further, the UE according to the related art may enter the RRC connected state with either of the macro eNodeB and the pico eNodeB but does not enter the RRC connected state with both the macro eNodeB and the pico eNodeB at the same time. Thus, when the UE has to enter the RRC connected state with both the macro eNodeB and the pico eNodeB at the same time, backward compatibility of the UE is unlikely to be guaranteed.

In this regard, according to an embodiment of the present disclosure, it is possible to further reduce the load on the UE related to wireless communication in the macro cell and the small cell. Further, according to an embodiment of the present disclosure, it is possible to guarantee the backward compatibility of the UE. Hereinafter, specific content of <<<2. Schematic configuration of wireless communication system>>>, <<<3. Configuration of respective devices>>>, <<<4. Process flow>>>, and <<<5. Modified examples>>> will be described.

### <<<2. Schematic configuration of a wireless communication system>>>

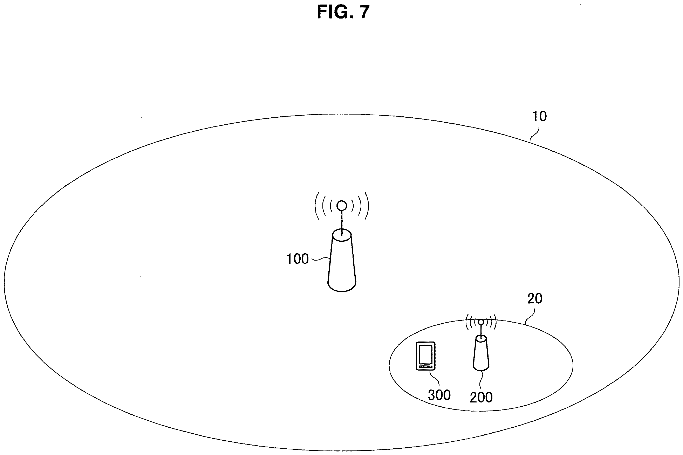

A schematic configuration of a wireless communication system according to an embodiment of the present disclosure will be described with reference to FIG. 7. FIG. 7 is an illustrative diagram showing an example of the schematic configuration of the wireless communication system according to the present embodiment. The wireless communication system is a wireless communication system based on, for example, LTE advanced (LTE-A). Referring to FIG. 7, the wireless communication system includes a macro eNodeB 100 of the macro cell 10 and a pico eNodeB 200 of the pico cell 20, and a UE 300.

### (Macro eNodeB 100)

The macro eNodeB 100 performs wireless communication with the UE 300 in the macro cell 10. For example, the macro eNodeB 100 performs the carrier aggregation. In other words, the macro eNodeB 100 can use a plurality of component carriers (CCs) for wireless communication with one UE 300.

As one example, in the macro cell 10, a CC of a 2 MHz band is used for wireless communication between the macro eNodeB 100 and the UE 300.

### (Pico eNodeB 200)

The pico eNodeB 200 performs wireless communication with the UE 300 in the pico cell 20. The pico cell 20 is overlapped by the macro cell 10 partially or entirely. For example, the pico eNodeB 200 can use a plurality of component carriers (CCs) for wireless communication with one UE 300.

The pico eNodeB 200 uses a CC different from a CC used by the macro eNodeB 100 (at least simultaneously). For example, a frequency band used in the pico cell 20 is higher than a frequency band used in the macro cell 10. As one example, in the pico cell 20, a CC of a 5 MHz band is used for wireless communication between the pico eNodeB 200 and the UE 300.

For example, the pico eNodeB 200 is mounted as a remote radio head (RRH). More specifically, for example, the pico eNodeB 200 mainly includes an analog signal processing unit and an antenna unit, and is extended from the macro eNodeB 100 via an optical fiber. Further, the macro eNodeB 100 side is provided with a communication control function for a pico cell.

The UE 300 wirelessly communicates with the macro eNodeB 100 within the macro cell 10. In addition, the UE 300 wirelessly communicates with the pico eNodeB 200 within the pico cell 20.

Further, the UE 300 can perform wireless communication using one primary frequency band and one or more secondary frequency bands. For example, the UE 300 uses one primary frequency band and one or more secondary frequency bands in the carrier aggregation. In other words, the UE 300 is a UE supporting the carrier aggregation. More specifically, one primary frequency band is one PCC, and one or more secondary frequency bands are one or more SCCs. In other words, the UE 300 uses one PCC and one or more SCCs in the carrier aggregation.

### <<<3. Configurations of respective devices>>>

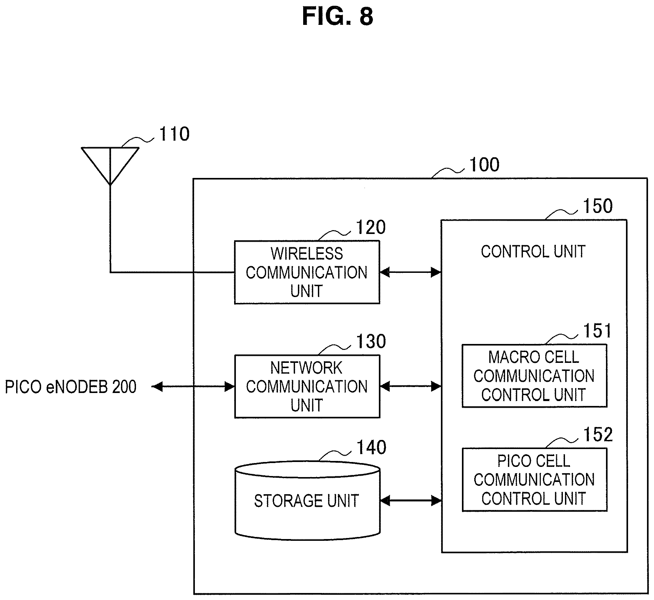

Next, examples of respective configurations of the macro eNodeB 100, the pico eNodeB 200, and the UE 300 will be described with reference to FIGS. 8 to 11.

### «3.1. Configuration of a macro eNodeB»

First, an example of a configuration of the macro eNodeB 100 will be described with reference to FIGS. 8 to 9. FIG. 8 is a block diagram showing the example of the configuration of the macro eNodeB 100 according to the present embodiment. Referring to FIG. 8, the macro eNodeB 100 is provided with an antenna unit 110, a wireless communication unit 120, a network communication unit 130, a storage unit 140, and a control unit 150.

### (Antenna unit 110)

The antenna unit 110 receives a radio signal and outputs the received radio signal to the radio communication unit 120. The antenna unit 110 transmits a transmission signal output by the radio communication unit 120.

### (Wireless communication unit 120)

The wireless communication unit 120 wirelessly communicates with the UE 300 that is positioned within the macro cell 10. The wireless communication unit 120 includes, for example, a radio frequency (RF) circuit and other circuits.

For example, the wireless communication unit 120 performs wireless communication with the UE 300 using one or more component carriers (CCs). As one example, each of one or more CCs is a CC of a 2 MHz band.

### (Network communication unit 130)

The network communication unit 130 communicates with other devices. For example, the network communication unit 130 communicates with the pico eNodeB 200. The network communication unit 130 includes, for example, a communication interface for any type of wired communication.

### (Storage unit 140)

The storage unit 140 stores programs and data for operations of the macro eNodeB 100. The storage unit 140 includes a storage medium, for example, a hard disk, a semiconductor memory, or the like.

### (Control unit 150)

The control unit 150 provides various functions of the macro eNodeB 100. For example, the control unit 150 corresponds to a processor such as a CPU or a DSP, and provides the various functions by causing programs stored in the storage unit 140 or other storage media to be executed. The control unit 150 includes an information macro cell communication control unit 151 and a pico cell communication control unit 153.

### (Macro cell communication control unit 151)

The macro cell communication control unit 151 controls wireless communication by the UE 300 when the UE 300 is located within the macro cell 10.

For example, the macro cell communication control unit 151 processes reception information output from the wireless communication unit 120. Further, the macro cell communication control unit 151 processes transmission information, outputs the processed transmission information to the wireless communication unit 120, and causes the wireless communication unit 120 to transmit the transmission information.

Further, for example, the macro cell communication control unit 151 performs general control of wireless communication in the macro cell 10. As one example, the macro cell communication control unit 151 performs a resource assignment (that is, scheduling) for a CC to be used in the macro cell 10.

Particularly, in the present embodiment, when the UE 300 is located within the macro cell 10 and the pico cell 20, the macro cell communication control unit 151 controls the UE 300 such that one of one or more CCs for performing wireless communication in one of the macro cell 10 and the pico cell 20 is used as the PCC, and each of one or more CCs for performing wireless communication in the other is used as the SCC.

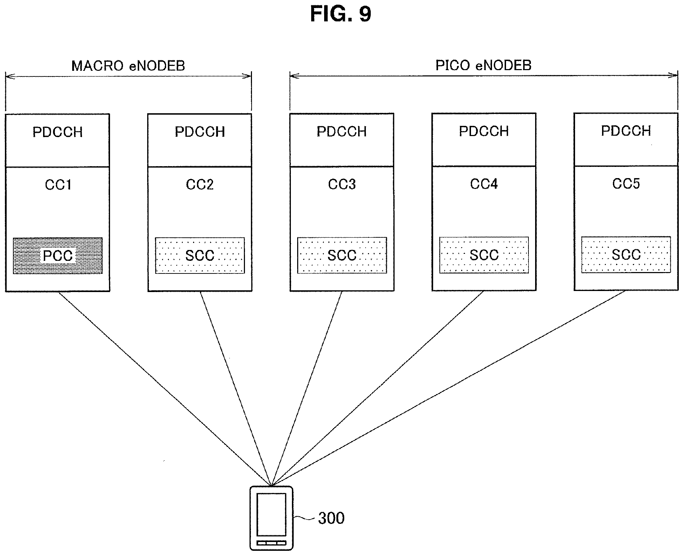

For example, one of the macro cell 10 and the pico cell 20 is the macro cell 10, and the other of the macro cell 10 and the pico cell 20 is the pico cell 20. In other words, when the UE 300 is located within the macro cell 10 and the pico cell 20, the macro cell communication control unit 151 controls the UE 300 such that one of one or more macro cell CCs for wireless communication in the macro cell 10 is used as the PCC, and each of one or more pico cell CCs for wireless communication in the pico cell 20 is used as the SCC. Further, for example, when one or more macro cell frequency bands include a plurality of macro cell frequency bands, the macro cell communication control unit 151 controls the UE 300 such that the rest of the one or more macro cell frequency bands are used as the secondary frequency band. The macro cell CC/the pico cell CC is a CC used when the UE 300 performs wireless communication in the macro cell 10/the pico cell 20. Further, a CC used (or a CC that is usable) in the macro cell 10/the pico cell 20 is not limited to a CC used by the UE 300 and includes a CC used (or a CC that is usable) by another UE. Next, a specific example of CC utilization control will be described with reference to FIG. 9.

FIG. 9 is an illustrative diagram for describing a CC utilization example of the UE 300 through control according to the present embodiment. Referring to FIG. 9, the UE 300 and 5 CCs used by the UE 300 are illustrated. A CC1 and a CC2 among the 5 CCs are macro cell CCs used for performing wireless communication in the macro cell 10. Further, a CC3, a CC4, and a CC5 among the 5 CCs are pico cell CCs used for performing wireless communication in the pico cell 20. As described above, the UE 300 performs wireless communication with both the macro eNodeB and the pico eNodeB using the macro cell CC and the pico cell CC simultaneously in the carrier aggregation

In the example illustrated in FIG. 9, the CC1 serving as the macro cell CC among the 5 CCs used by the UE 300 is used as the PCC by the UE 300. As described above, one of the macro cell CCs is used as the PCC, and each of the pico cell CCs is used as the SCC.

As described above, the macro cell communication control unit 151 causes the UE 300 to use the macro cell CC and the pico cell CC in the carrier aggregation.

As more specific control, for example, firstly, the macro cell communication control unit 151 causes the UE 300 to use a CC usable in the macro cell 10 as the PCC through the same procedure as the carrier aggregation of the related art. Specifically, for example, the macro cell communication control unit 151 causes the UE 300 to enter the RRC connected state by performing a connection procedure of the UE 300 and the macro eNodeB 100 according to random access by the UE 300 to a CC usable in the macro cell 10. As a result, the CC becomes the PCC. Then, naturally, the macro cell communication control unit 151 causes the wireless communication unit 120 to transmit and receive a control signal of the PCC through the macro cell CC used as the PCC.

Further, for example, secondly, the macro cell communication control unit 151 causes the UE 300 to use a CC usable in the macro cell 10 as the SCC through the same procedure as the carrier aggregation of the related art. Specifically, for example, the macro cell communication control unit 151 causes the UE 300 to measure a communication quality for the CC usable in the macro cell 10, and acquires a measurement result. Then, the macro cell communication control unit 151 decides a CC to be used by the UE 300 in the macro cell 10 based on the measurement result (and other information). Thereafter, the macro cell communication control unit 151 instructs the UE 300 to use the decided CC as the SCC through the wireless communication unit 120. As a result, the UE 300 uses the CC usable in the macro cell 10 as the SCC. Then, naturally, the macro cell communication control unit 151 causes the wireless communication unit 120 to transmit and receive the control signal of the SCC through the macro cell CC used as the SCC.

Further, for example, thirdly, the macro cell communication control unit 151 causes the UE 300 to use the CC usable in the pico cell 20 as the SCC. Specifically, for example, the macro cell communication control unit 151 causes the UE 300 to measure a communication quality for the CC usable in the pico cell 20 through the wireless communication unit 120, and acquires a measurement result. Then, the macro cell communication control unit 151 selects a CC from among the CCs usable in the pico cell 20 based on the measurement result. For example, a CC having an excellent communication quality is selected. Then, when the use of the selected CC is permitted by the pico cell communication control unit 153, the macro cell communication control unit 151 decides the corresponding CC as a CC to be used in the pico cell 20. Thereafter, the macro cell communication control unit 151 instructs the UE 300 to use the decided CC as the SCC through the wireless communication unit 120. As a result, the UE 300 uses the CC usable in the pico cell 20 as the SCC.

Through the carrier aggregation of the macro cell CC and the pico cell CC, the UE 300 can use the macro cell CC as the PCC (or the SCC) and use the pico cell CC as the SCC. Thus, the UE may not perform a number of transactions (for example, dozens of transactions) for entering the RRC connected state through the corresponding CC in order to use the CC usable in the pico cell 20 as the pico cell CC of the UE 300. For example, the UE may perform acquisition of a timing advance value of a random access channel among a number of transactions that are typically performed to enter the RRC connected state and may not perform the remaining transactions. As described above, it is possible to reduce a load on the UE 300 related to wireless communication in the macro cell 10 and the pico cell 20.

Further, through the carrier aggregation of the macro cell CC and the pico cell CC, the UE 300 need not enter the RRC connected state with both the macro eNodeB 100 and the pico eNodeB 200, and thus the backward compatibility of the UE can be guaranteed.

Further, through the carrier aggregation of the macro cell CC and the pico cell CC, all pico cell CCs are used as the SCC. Furthermore, the SCC has a smaller control signal to be transmitted than the PCC. Thus, the control signal to be transmitted through the pico cell CC can be further reduced. As a result, the throughput of the pico cell 20 can be increased.

For example, none of the pico cell CCs is used as the PCC. In other words, the use of each of the pico cell CCs is limited to the use as the SCC. Thus, the control signal to be transmitted through the pico cell CC is consistently small. As a result, the throughput of the pico cell 20 can be increased.

Further, as described above, in the carrier aggregation of the macro cell CC and the pico cell CC, the macro cell CC is used as the PCC. As a result, as long as the UE 300 is located within the macro cell, even when the UE 300 moves in and out of the pico cell 20, it is unnecessary to change the PCC through inter-frequency handover, and it is desirable to add or delete the SCC. Thus, inter-frequency handover of the PCC can be further reduced. As a result, the burden on the UE 300 is reduced.

### (Pico cell communication control unit 153)

The pico cell communication control unit 153 controls wireless communication performed by the UE 300 in the pico cell 20 when the UE 300 is located within the pico cell 20.

For example, the pico cell communication control unit 153 acquires reception information from the pico eNodeB 200 through the network communication unit 130, and processes the reception information. Further, the pico cell communication control unit 153 processes transmission information, provides the processed transmission information to the pico eNodeB 200 through the network communication unit 130, and causes the pico eNodeB 200 to transmit the transmission information.

Further, for example, the pico cell communication control unit 153 performs general control for wireless communication in the pico cell 20. As one example, the pico cell communication control unit 153 performs a resource assignment (that is, scheduling) for a CC to be used in the pico cell 20.

Particularly, in the present embodiment, for example, when the UE 300 is located within the macro cell 10 and the pico cell 20, and uses one of one or more macro cell CCs for wireless communication in the macro cell 10 as the PCC, the pico cell communication control unit 153 controls the UE 300 such that each of one or more pico cell CCs for wireless communication in the pico cell 20 is used as the SCC.

As more specific control, for example, when the macro cell communication control unit 151 selects a CC to be used in the pico cell 20, the pico cell communication control unit 153 determines whether or not the selected CC is usable for the UE 300. Then, when the selected CC is usable for the UE 300, the pico cell communication control unit 153 notifies the macro cell communication control unit 151 of permission for the use of the corresponding CC. As a result, the UE 300 uses the pico cell CC as the SCC.

Further, for example, the pico cell communication control unit 153 causes the pico eNodeB 200 to transmit and receive the control signal of the SCC through the pico CC. As a result, the UE 300 actually uses the pico cell CC as the SCC.

### «3.2. Configuration of pico eNodeB»

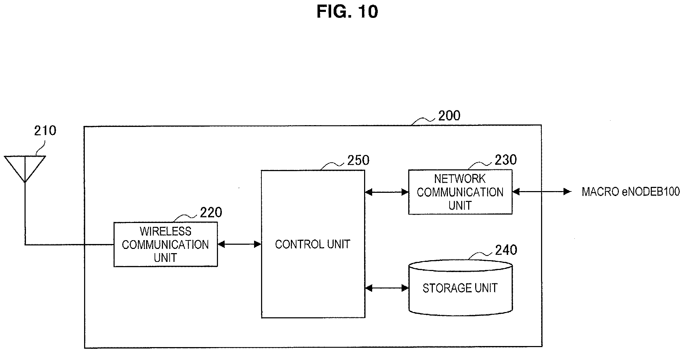

Next, an example of a configuration of the pico eNodeB 200 will be described with reference to FIG. 10. FIG. 10 is a block diagram illustrating an example of a configuration of the pico eNodeB 200 according to the present embodiment. Referring to FIG. 10, the pico eNodeB 200 includes an antenna unit 210, a wireless communication unit 220, a network communication unit 230, a storage unit 240, and a control unit 250. As described above, for example, the pico eNodeB 200 is a remote radio head (the RRH).

### (Antenna unit 210)

The antenna unit 210 receives a radio signal and outputs the received radio signal to the radio communication unit 220. The antenna unit 210 transmits the transmitted signal output by the radio communication unit 220.

### (Wireless communication unit 220)

The wireless communication unit 220 wirelessly communicates with the UE 300 that is positioned within the pico cell 20. The wireless communication unit 220 includes, for example, an RF circuit and other circuits.

For example, the wireless communication unit 220 performs wireless communication with the UE 300 using one or more component carriers (CCs). As one example, each of one or more CCs is a CC of a 5 MHz band.

### (Network communication unit 230)

The network communication unit 230 communicates with other devices. For example, the network communication unit 230 communicates with the macro eNodeB 100. The network communication unit 230 includes, for example, a communication interface for any type of wired communication.

### (Storage unit 240)

The storage unit 240 stores programs and data for operations of the pico eNodeB 200. The storage unit 240 includes a storage medium, for example, a hard disk, a semiconductor memory, or the like.

### (Control unit 250)

The control unit 250 provides the function of the pico eNodeB 200. Particularly, in the present embodiment, the control unit 250 performs control such that the pico eNodeB 200 operates as the RRH.

For example, the control unit 250 acquires the scheduling information (downlink assignment information) for the CC of the pico cell 20 from the macro eNodeB 100 (the pico cell communication control unit 153) through the network communication unit 230. Then, the control unit 250 causes the wireless communication unit 220 to transmit the transmission information based on the scheduling information.

Further, for example, the control unit 250 acquires the channel state information between the eNodeB 200 and the UE 300, and causes the wireless communication unit 220 to transmit the channel state information to the macro eNodeB 100.

The example of a configuration of the pico eNodeB 200 has been described above. As described above, in the present embodiment, for example, the pico eNodeB 200 is the RRH. This is because the scheduling information for the CC used in the pico cell 20 is transmitted using the macro cell 10 without any delay.

More specifically, since the channel state between the pico eNodeB 200 and the UE 200 changes in the order of several milliseconds to 10 milliseconds (ms), in order to accurately reflect the channel state in determination of the scheduler, no delay is permitted after the channel state information is acquired. Thus, in the scenario in which the eNodeB 200 that does not function as the RRH controls scheduling or the like, it is not easy in terms of a time that the macro eNodeB 100 handles the scheduling information of the pico eNodeB 200. In this regard, the pico eNodeB functions as the RRH, and control functions are aggregated in the macro eNodeB. As a result, the scheduling information for the CC used in the pico cell 20 can be transmitted using the macro cell 10 without any delay.

### «3.3. Configuration of a UE»

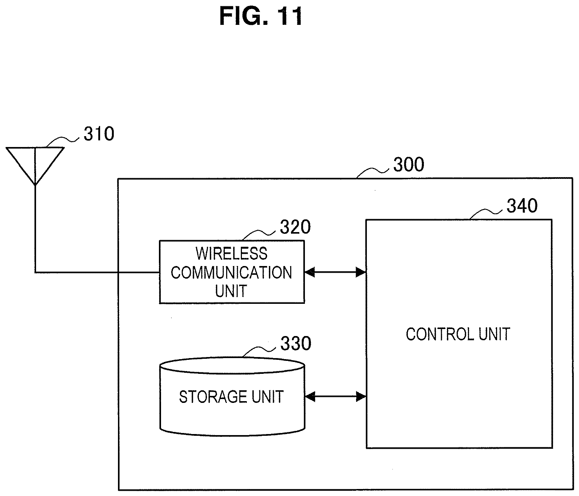

Next, an example of a configuration of the UE 300 will be described with reference to FIG. 11. FIG. 11 is a block diagram showing the example of the configuration of the UE 300 according to the present embodiment. Referring to FIG. 11, the UE 300 is provided with an antenna unit 310, a wireless communication unit 320, a storage unit 330, and a control unit 340.

### (Antenna unit 310)

The antenna unit 310 receives a radio signal and outputs the received radio signal to the radio communication unit 320. The antenna unit 310 transmits a transmission signal output by the radio communication unit 320.

### (Wireless communication unit 320)

The wireless communication unit 320 performs wireless communication within the macro cell 10 using one or more macro cell CCs for wireless communication in the macro cell 10. In other words, the wireless communication unit 320 performs wireless communication with the macro eNodeB 100 within the macro cell 10 using one or more macro cell CCs.

Further, the wireless communication unit 320 performs wireless communication within the pico cell 20 using one or more pico cell CCs for wireless communication in the pico cell 20. In other words, the wireless communication unit 320 performs wireless communication with the pico eNodeB 200 within the pico cell 20 using one or more pico cell CCs.

Further, for example, the wireless communication unit 320 includes an RF circuit and other circuits.

### (Storage unit 330)

The storage unit 330 stores programs and data for operations of the UE 300. The storage unit 330 includes a storage medium, for example, a hard disk, a semiconductor memory, or the like.

### (Control unit 340)

The control unit 340 provides various functions of the UE 300. For example, the control unit 340 corresponds to a processor such as a CPU or a DSP, and provides the various functions by causing programs stored in the storage unit 330 or other storage media to be executed.

For example, the control unit 340 processes reception information output from the wireless communication unit 320. Further, the control unit 340 processes transmission information, outputs the processed transmission information to the wireless communication unit 320, and causes the wireless communication unit 320 to transmit the transmission information.

Further, the control unit 340 performs general control for wireless communication. As one example, the macro cell communication control unit 151 measures a communication quality for the CC usable in the macro cell 10 and the CC usable in the pico cell 20, and provides a measurement result to the macro eNodeB 100 through the wireless communication unit 320. Further, as another example, when resources for the UE 300 are not assigned, the control unit 340 causes the wireless communication unit 320 to transmit a scheduling request through a control channel (specifically, a Physical Uplink Control CHannel (PUCCH)).

Particularly, in the present embodiment, for example, the control unit 340 uses one of one or more macro cell frequency bands as the PCC, and uses each of one or more small cell frequency bands as the SCC.

Specifically, for example, the control unit 340 performs random access to a CC usable in the macro cell 10 through the wireless communication unit 320, and performs the connection procedure with the macro eNodeB 100. Then, the UE 300 enters the RRC connected state, and the CC functions as the PCC. In other words, the UE 300 uses the macro cell CC as the PCC. Then, naturally, the control unit 340 causes the wireless communication unit 320 to transmit and receive the control signal of the PCC through the macro cell CC used as the PCC.

Further, for example, when the UE 300 receives an instruction of permitting the use of the CC usable in the pico cell from the macro eNodeB 100, the control unit 340 activates the CC as the SCC through the macro cell CC being used as the PCC. In other words, the UE 300 activates the CC as the SCC by declaring that the CC is used as the SCC to a Mobility Management Node (MMC) by Non-Access Stratum (NAS) signaling through the PCC. Then, naturally, the control unit 340 causes the wireless communication unit 320 to transmit and receive the control signal of the PCC through the pico cell CC used as the SCC.

### <<<4. Process flow>>>

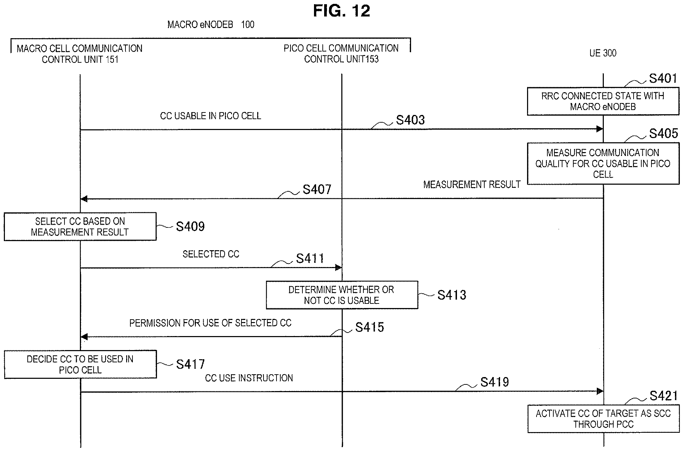

Next, an example of a communication control process according to the present embodiment will be described with reference to FIG. 12. FIG. 12 is a sequence diagram illustrating an example of a schematic flow of a communication control process according to the present embodiment.

First, in step S401, the UE 300 enters the RRC connected state with the macro eNodeB 100. In other words, the UE 300 uses one of the macro cell CCs of the UE 300 as the PCC.

Then, in step S403, the macro cell communication control unit 151 of the macro eNodeB 100 notifies the UE 300 of the CCs usable in the pico cell 20.

Then, step S405, the UE 300 measures a communication quality for the CCs usable in the pico cell 20. Then, in step S407, the UE 300 transmits a measurement result to the macro eNodeB 100.

In step S409, the macro cell communication control unit 151 of the macro eNodeB 100 selects a CC from the CCs usable in the pico cell 20 based on the measurement result. Then, in step S411, the macro cell communication control unit 151 notifies the pico cell communication control unit 153 of the CC selected to be used in the pico cell 20.

In step S413, the pico cell communication control unit 153 of the macro eNodeB 100 determines whether the selected CC is usable. Then, when the selected CC is usable, in step S415, the pico cell communication control unit 153 notifies the macro cell communication control unit 151 of the permission for the use of the CC.

In step S417, the macro cell communication control unit 151 of the macro eNodeB 100 decides the selected CC as a CC to be used in the pico cell. Then, in step S419, the macro cell communication control unit 151 instructs the UE 300 to use the decided CC.

In step S421, the UE 300 activates a CC of a target decided by the macro eNodeB as the SCC through the macro cell CC being used as the PCC. In other words, the UE 300 activates the CC of the target as the SCC by declaring that the CC of the target is used as the SCC to the MMC by NAS signaling through the PCC.

As described above, the communication control process is performed. Further, for example, some or all of step S405 to step S421 are repeatedly performed.

### <<<5. Modified examples>>>

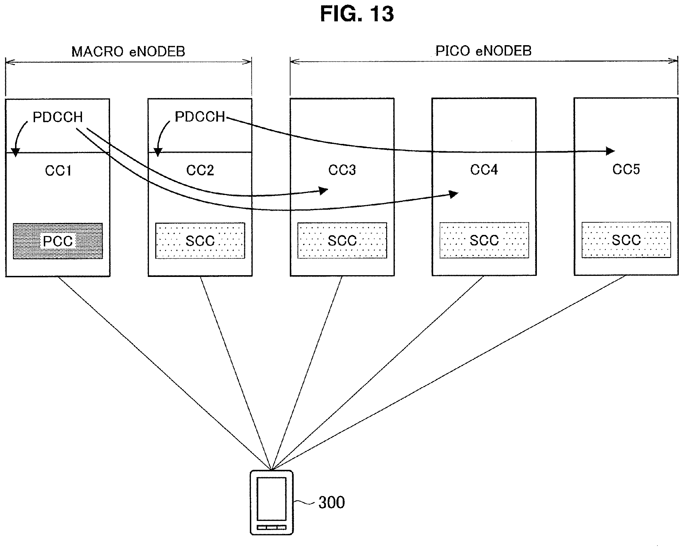

Next, first to fourth modified examples according to the present embodiment will be described with reference to FIGS. 13 to 20.

### «5.1. First modified example»

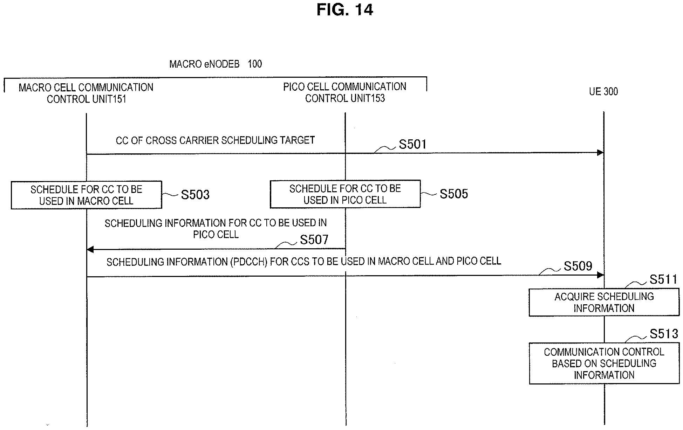

First, the first modified example according to the present embodiment will be described with reference to FIGS. 13 and 14.

### <5.1.1. Overview>

In the first modified example, the cross carrier scheduling is applied in the carrier aggregation of the macro CC and the pico CC. Further, the macro cell CC functions as the anchor point of the cross carrier scheduling.

More specifically, the resource assignment information (the scheduling information) for each of one or more pico cell CCs is transmitted using any one of one or more macro cell CCs. In other words, the PDCCH for transmitting the scheduling information is arranged in the CC used in the macro cell 10, but the PDCCH is not arranged in the CC used in the pico cell 20. Further, the scheduling information for the CC used in the pico cell 20 is transmitted through the PDCCH of the CC used in the macro cell 10. This point will be specifically described below with reference to FIG. 13.

FIG. 13 is an illustrative diagram for describing an example of transmission of the PDCCH according to the first modified example of the present embodiment. Referring to FIG. 13, the UE 300 and the 5 CCs used by the UE 300 are illustrated, similarly to the example illustrated in FIG. 9. The CC1 and the CC2 among the 5 CCs are the macro cell CCs used when the UE 300 performs wireless communication in the macro cell 10. Further, the CC3, the CC4, and the CC5 among the 5 CCs are the pico cell CCs used when the UE 300 performs wireless communication in the pico cell 20. In the example illustrated in FIG. 13, the cross carrier scheduling is applied, unlike the example illustrated in FIG. 9. More specifically, the PDCCH is arranged in the CC1 and the CC2 serving as the macro cell CC, but the PDCCH is not arranged in the CC3, the CC4, and the CC5 serving as the pico cell CC. Further, the scheduling information for the CC3 and the CC4 is transmitted through the PDCCH of the CC1. Further, the scheduling information for the CC5 is transmitted through the PDCCH of the CC2.

As described above, according to the first modified example of the present embodiment, it is possible to remove the PDCCH from the CC used in the pico cell 20. Thus, control of the pico cell 20 side can be further simplified. Further, the UE 300 preferably monitors the PDCCH for the macro cell CC (for example, a 2 GHz band) of the UE 300, and need not monitor the PDCCH for the pico cell CC of the UE 300 (for example, a 5 GHz band). Thus, the load of the UE 300 can be reduced.

### <5.1.2. Configurations of respective devices>

Next, configurations of respective devices according to the first modified example of the present embodiment will be described. Here, only points different from the content described above with reference to FIGS. 8, 10, and 11 will be described.

### (Macro eNodeB 100)

### - Macro cell communication control unit 151

The macro cell communication control unit 151 causes the wireless communication unit 120 to transmit the resource assignment information (the scheduling information) for the CC used in the pico cell 20 using the CC used in the macro cell 10. More specifically, the macro cell communication control unit 151 acquires the scheduling information of the CC used in the pico cell from the pico cell communication control unit 153. Then, the macro cell communication control unit 151 transmits the scheduling information through the PDCCH of the CC used in the macro cell 10.

Further, the macro cell communication control unit 151 notifies the UE 300 of the CC of the cross carrier scheduling target through the wireless communication unit 120. For example, the macro cell communication control unit 151 notifies the UE 300 of the CC of the target through RRC signaling.

### - Pico cell communication control unit 153

The pico cell communication control unit 153 does not cause the pico eNodeB 200 to transmit the resource assignment information (the scheduling information) for one or more CCs used in the pico cell 20. Instead, the pico cell communication control unit 153 provides the scheduling information to the macro cell communication control unit 151. As a result, the scheduling information is transmitted through the PDCCH of the CC used in the macro cell 10.

### (UE 300)

### - Control unit 340

The resource assignment information (the scheduling information) for each of one or more pico cell CCs is received by the wireless communication unit 320 using one or more macro cell CCs. More specifically, the resource assignment information is received by the PDCCH of the macro cell CC. Then, the control unit 340 acquires the resource assignment information.

Further, the resource assignment information of the macro cell CC and the pico cell CC is not received by the wireless communication unit 320 using one or more pico cell CCs. Thus, the control unit 340 does not acquire the resource assignment information from information received using one or more pico cell CCs. Further, the CC (including the pico cell CC) of the cross carrier scheduling target is notified of by the macro eNodeB 100.

### <5.1.3. Process flow>

Next, an example of a communication control process according to the first modified example of the present embodiment will be described with reference to FIG. 14. FIG. 14 is a sequence diagram illustrating an example of a schematic flow of a communication control process according to the first modified example of the present embodiment.

In step S501, the macro cell communication control unit 151 of the macro eNodeB 100 notifies the UE 300 of the CC of the cross carrier scheduling target.

In step S503, the macro cell communication control unit 151 of the macro eNodeB 100 performs scheduling for the CC used in the macro cell 10.

Further, in step S505, the pico cell communication control unit 153 of the macro eNodeB 100 performs scheduling for the CC to be used in the pico cell 20. Then, the pico cell communication control unit 153 provides the scheduling information to the macro cell communication control unit 151.

Then, in step S509, the macro cell communication control unit 151 of the macro eNodeB 100 transmits the scheduling information for the macro cell 10 and the scheduling information for the pico cell 20 through the PDCCH of the CC used in the macro cell 10 to the wireless communication unit 120.

Thereafter, in step S511, the control unit 340 of the UE 300 acquires the scheduling information for the macro cell 10 and the scheduling information for the pico cell 20. Then, in step S513, the control unit 340 performs wireless communication control based on the scheduling information. In other words, the control unit 340 acquires information directed to the UE 300 according to the downlink assignment information for the UE 300. Further, the control unit 340 causes the wireless communication unit 320 to transmit information according to the uplink grant information for the UE 300.

### «5.2. Second modified example»

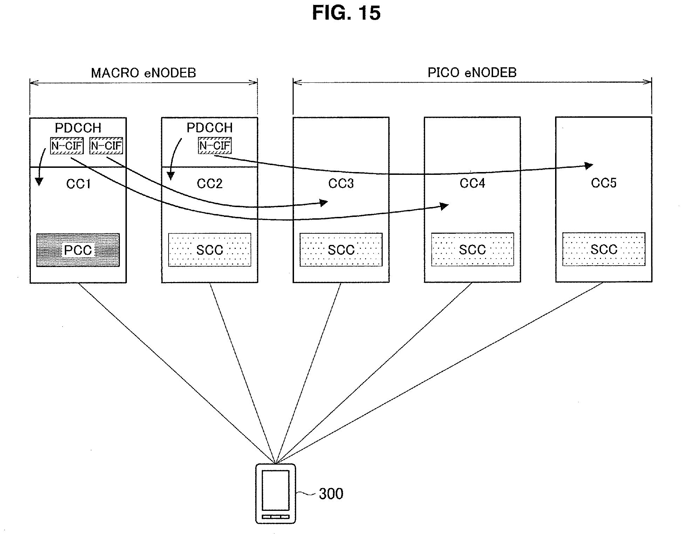

Next, a second modified example according to the present embodiment will be described with reference to FIGS. 15 to 17.

### <5.2.1. Overview>

In the second modified example, the cross carrier scheduling is applied in the carrier aggregation of the macro cell CC and the pico cell CC, similarly to the first modified example. Further, the macro cell CC functions as an anchor point of the cross carrier scheduling. Furthermore, particularly, in the second modified example, a CIF of a related art designating the CC used in the macro cell 10 (hereinafter referred to as a "Legacy (L)-CIF") or a CIF designating the CC used in the pico cell 20 (hereinafter referred to as a "New (N)-CIF") is transmitted. Further, the UE 300 is notified of one of the L-CIF or the N-CIF to be transmitted.

The resource assignment information (the scheduling information) of one or more pico cell CCs of the UE 300 is transmitted using any one of the macro cell CCs of the UE 300. In this case, pico cell CC identification information (that is, the N-CIF) indicating one of CCs usable in the pico cell 20 serving as the target of the resource assignment information is also transmitted using any one CC. Further, the UE 300 is notified that the small cell band identification information (that is, the N-CIF) is transmitted using the one macro cell CC. This point will be specifically described below with reference to FIG. 15.

FIG. 15 is an illustrative diagram for describing an example of an N-CIF according to the second modified example of the present embodiment. Referring to FIG. 15, the UE 300 and the 5 CCs used by the UE 300 are illustrated, similarly to the example illustrated in FIG. 13. Since the cross carrier scheduling is applied, the PDCCH is arranged in the CC1 and the CC2 serving as the macro cell CC, but the PDCCH is not arranged in the CC3, the CC4, and the CC5 serving as the pico cell CC. The scheduling information for the CC3 and the CC4 is transmitted through the PDCCH of the CC1. The N-CIF designating the CC3 and the CC4 serving as the pico cell CC is also transmitted through the PDCCH of the CC1. The scheduling information for the CC5 is transmitted through the PDCCH of the CC1 serving as the macro cell CC. The N-CIF designating the CC5 serving as the pico cell CC is also transmitted through the PDCCH of the CC2. As described above, when the scheduling information of the pico cell CC is transmitted through the macro cell CC serving as the anchor point, the N-CIF designating the pico cell CC is transmitted. Further, the UE 300 is notified in advance through RRC signaling that the CIF corresponding to the scheduling information of the UE 300 is the N-CIF rather than the L-CIF.

The second modified example of the present embodiment has advantages.

Specifically, in the cross carrier scheduling for the CC used in the macro cell 10 according to the related art, a 3-bit CIF designating the CC used in the macro cell 10 is transmitted. Further, in the cross carrier scheduling for the CC used in the macro cell 10 and the CC used in the pico cell 20, the CIF has to designate the CC used in the pico cell 20 as well. However, since the CIF according to the related art is 3 bits, the number of bits is insufficient to designate the CC used in the pico cell 20 as well. When the number of bits of the CIF is increased, it is undesirable in terms of effective use of radio resources and backward compatibility.

In this regard, as in the second modified example of the present embodiment, the N-CIF identifying the CC of the carrier aggregation target among the CCs used in the pico cell is transmitted using the macro cell CC of the UE 300. The UE 300 is notified that the N-CIF is transmitted using the macro cell CC. Through the notification for the transmission of the N-CIF, the UE 300 can detect that the CIF to be transmitted is the N-CIF (that is, that the CIF to be transmitted designates the CC used in the pico cell). Thus, it is unnecessary to increase the number of bits of the CIF. As a result, the radio resources can be effectively used, and the backward compatibility can be also guaranteed.

### <5.2.2. Configurations of respective devices>

Next, configurations of respective devices according to the second modified example of the present embodiment will be described. Here, only points different from the content described above with reference to FIGS. 8, 10, and 11 will be described.

### (Macro eNodeB 100)

### - Macro cell communication control unit 151

For example, the resource assignment information (the scheduling information) of the pico cell CC of the UE 300 is transmitted using any one of the macro cell CCs of the UE 300. In this case, the macro cell communication control unit 151 causes the wireless communication unit 120 to transmit the N-CIF indicating one of CCs usable in the pico cell serving the target of the resource assignment information using any one of the macro cell CCs.

More specifically, when the N-CIF is transmitted using any one of the macro cell CCs, the N-CIF is included in the control information for the UE 300 that is transmitted using any one of the macro cell CCs. The control information is, for example, the Downlink Control Information (DCI).

Further, the macro cell communication control unit 151 notifies the UE 300 through the wireless communication unit 120 that the N-CIF is transmitted using any one of the macro cell CCs. For example, the macro cell communication control unit 151 provides the notification by RRC signaling through the wireless communication unit 120.

Further, when the N-CIF is transmitted using any one of the macro cell CCs, the macro cell CC identification information (that is, the L-CIF) indicating any one CC among the frequency bands usable in the macro cell 10 that serves as the target of the resource assignment information of the UE 300 is not transmitted using any one of the macro cell CCs. In other words, when the N-CIF is transmitted using any one of the macro cell CCs, the macro cell communication control unit 151 does not cause the wireless communication unit 120 to transmit the L-CIF using any one of the macro cell CCs.

More specifically, when the N-CIF is included in control information for the UE 3 that is transmitted using any one of the macro cell CCs, the L-CIF is not included in the control information. The control information is, for example, the DCI.

If the N-CIF for the UE 300 and the L-CIF for the UE 300 are transmitted through the same macro cell CC (more specifically, the same DCI), the UE 300 has to distinguish the L-CIF from the N-CIF. However, as described above, when the N-CIF for the UE 300 and the L-CIF for the UE 300 are not transmitted through the same macro cell CC (more specifically, the same DCI), the UE 300 need not distinguish the CIFs from each other. Thus, since it is unnecessary to newly set a bit used for the distinguishing, the radio resources can be effectively used, and the backward compatibility can be also guaranteed.

### (UE 300)

### - Control unit 340

When the N-CIF is transmitted using the macro cell CC, the macro eNodeB 100 notifies the UE 300 that the N-CIF is transmitted using the macro cell CC. In this case, the control unit 340 receives the notification indicating that the N-CIF is transmitted using the macro cell CC from the macro eNodeB 100 through the wireless communication unit 320. Then, the control unit 340 identifies the pico cell CC the CIF (that is, the N-CIF) received using the macro cell CC. Then, the control unit 340 controls wireless communication using the identified pico cell CC based on the scheduling information of the UE 300 received using the macro cell CC.

Further, when the macro eNodeB 100 transmits the L-CIF using the macro cell CC, the control unit 340 identifies the macro cell CC from the CIF (that is, the L-CIF) received using the macro cell CC. Then, the control unit 340 controls wireless communication using the identified macro cell CC based on the scheduling information of the UE 300 received using the macro cell CC.

### <5.2.3. Process flow>

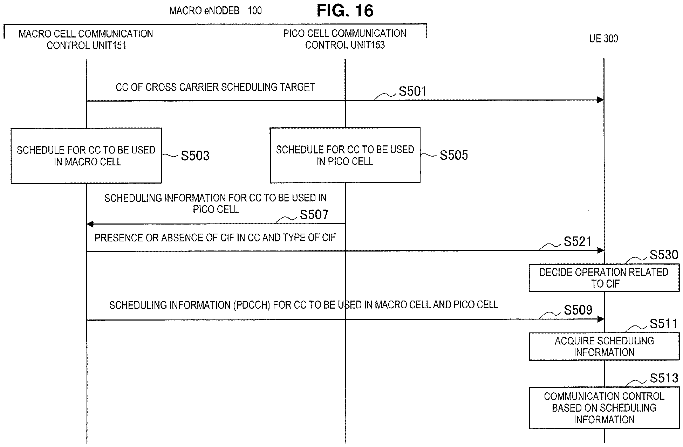

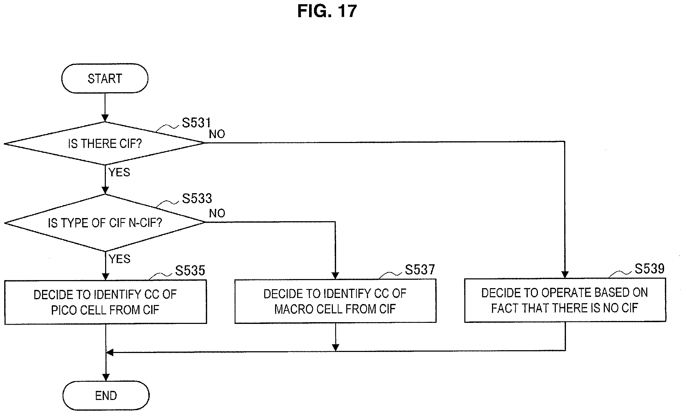

Next, an example of a communication control process according to the first modified example of the present embodiment will be described with reference to FIGS. 16 and 17. FIG. 16 is a sequence diagram illustrating an example of a schematic flow of a communication control process according to the second modified example of the present embodiment. Here, only steps S521 and S530 that are different between the communication control process according to the first modified example described above with reference to FIG. 14 and the communication control process according to the second modified example described above with reference to FIG. 16 will be described.

In step S521, the macro cell communication control unit 151 of the macro eNodeB 100 notifies the UE 300 through the wireless communication unit 120 of whether or not there is the CIF in the DCI of the UE 300 transmitted through the macro cell CC and a type of the CIF (the N-CIF or the L-CIF). For example, the macro cell communication control unit 151 notifies the UE 300 that the N-CIF is transmitted using the macro cell CC by notifying of the N-CIF as the type of CIF. Further, for example, the macro cell communication control unit 151 notifies the UE 300 that the L-CIF is transmitted using the macro cell CC by notifying of the L-CIF as the type of CIF.

In step S530, the UE 300 decides an operation of the UE 300 related to the CIF. This step will be more specifically described below with reference to FIG. 17.

### (Step S530)

FIG. 17 is a flowchart illustrating an example of a schematic flow of a process of deciding an operation of the UE 300 related to the CIF according to the second embodiment of the present embodiment.

In step S531, the control unit 340 determines whether or not there is the CIF in the DCI of the UE 300 transmitted through the macro cell CC based on the notification from the macro eNodeB 100. When there is the CIF, the process proceeds to step S533. Otherwise, the process proceeds to step S539.

In step S533, the control unit 340 determines whether or not the type of CIF is the N-CIF based on the notification from the macro eNodeB 100. When the type of CIF is the N-CIF, the process proceeds to step S535. Otherwise, the process proceeds to step S537.

In step S535, the control unit 340 decides to identify the CC used in the pico cell from the CIF. Then, the process ends.

In step S537, the control unit 340 decides to identify the CC used in the macro cell from the CIF. Then, the process ends.

In step S539, the control unit 340 decides to operate based on the fact that there is no CIF in the DCI transmitted using the macro cell CC. Then, the process ends.

### «5.3. Third modified example»

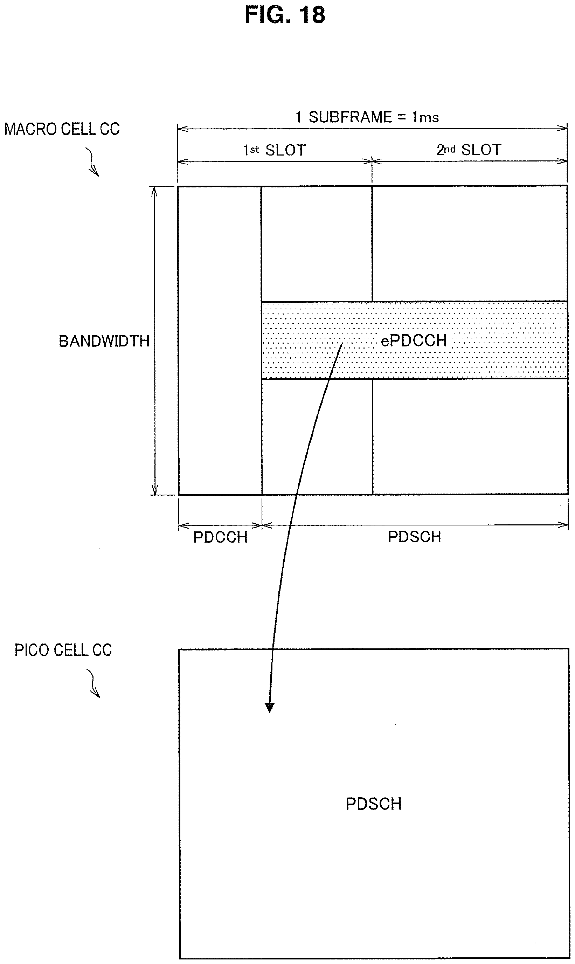

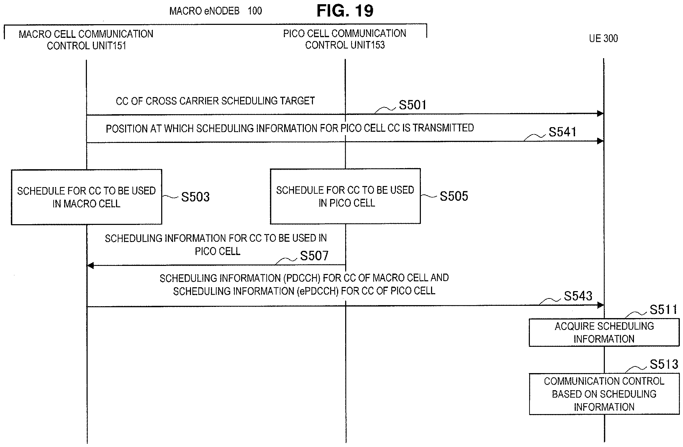

Next, the third modified example according to the present embodiment will be described with reference to FIGS. 18 and 19.

### <5.3.1. Overview>

In the third modified example, similarly to the first modified example, the cross carrier scheduling is applied in the carrier aggregation of the macro cell CC and the pico cell CC. Further, the macro cell CC functions as the anchor point of the cross carrier scheduling. Furthermore, particularly, in the third modified example, the resource assignment information (the scheduling information) for the pico cell CC is transmitted through an extension portion of the physical downlink control channel. More specifically, for example, the extension portion of the physical downlink control channel is the ePDCCH. This point will be specifically described below with reference to FIG. 18.

FIG. 18 is an illustrative diagram for describing an example of transmission of the scheduling information according to the third modified example of the present embodiment. Referring to FIG. 18, resources of the pico cell CC and the macro cell CC serving as the anchor point of the pico cell CC corresponding to one subframe are illustrated. As illustrated in FIG. 18, the scheduling information of the UE 300 for the pico cell CC is transmitted through the ePDCCH of the macro cell CC.

As described above, the depletion of the PDCCH can be prevented by transmitting the scheduling information through the ePDCCH. In other words, when one macro cell CC functions as the anchor point of a number of pico cell CCs, the macro eNodeB 100 transmits the scheduling information of a number of pico cell CCs using one macro cell CC. In this case, the scheduling information is considered to be difficult to transmit only through the PDCCH. Thus, by transmitting the scheduling information using the ePDCCH as well as the PDCCH, it is possible to transmit the scheduling information of a number of pico cell CCs.

The PDCCH has a width of a maximum of 3 OFDM symbols in the time direction, but the PDSCH has a width of a maximum of 11 OFDM symbols in the time direction. Thus, when all resources of the PDSCH are used as resources of the ePDCCH, the control region becomes 11/3 times.

### <5.3.2. Configurations of respective devices>

Next, configurations of respective devices according to the third modified example of the present embodiment will be described. Here, only points different from the content described above with reference to FIGS. 8, 10, and 11 will be described.

### (Macro eNodeB 100)

### - Macro cell communication control unit 151

The macro cell communication control unit 151 causes the wireless communication unit 120 to transmit the scheduling information for the pico cell CC through the ePDCCH of the macro cell CC.

Further, for example, the macro cell communication control unit 151 notifies the UE 300 of the position (for example, the position in the frequency direction and the time direction) in the ePDCCH through which the scheduling information for the pico cell CC of the UE 300 is transmitted through the wireless communication unit 120.

### (UE 300)

### - Control unit 340

The resource assignment information (the scheduling information) for the pico cell CC of the UE 300 is received by the wireless communication unit 320 using the macro cell CC of the UE 300. Then, the control unit 340 acquires the resource assignment information. Further, the UE 300 is notified through the macro eNodeB 100 of the position in the ePDCCH through which the scheduling information for the pico cell CC of the UE 300 is transmitted.

### <5.3.3. Process flow>

Next, an example of a communication control process according to the third modified example of the present embodiment will be described with reference to FIG. 19. FIG. 19 is a sequence diagram illustrating an example of a schematic flow of a communication control process according to the third modified example of the present embodiment. Here, only steps S541 and S543 that are different between the communication control process according to the first modified example described above with reference to FIG. 14 and the communication control process according to the third modified example described above with reference to FIG. 19 will be described.

In step S541, the macro cell communication control unit 151 of the macro eNodeB 100 notifies the UE 300 of the position (for example, the position in the frequency direction and the time direction) in the ePDCCH through which the scheduling information for the pico cell CC of the UE 300 is transmitted through the wireless communication unit 120.

In step S543, the macro cell communication control unit 151 of the macro eNodeB 100 transmits the scheduling information for the macro cell 10 through the PDCCH of the CC used in the macro cell 10 to the wireless communication unit 120. Further, the macro cell communication control unit 151 of the macro eNodeB 100 transmits the scheduling information for the pico cell 20 through the ePDCCH of the CC used in the macro cell 10 to the wireless communication unit 120.

### «5.4. Fourth modified example»

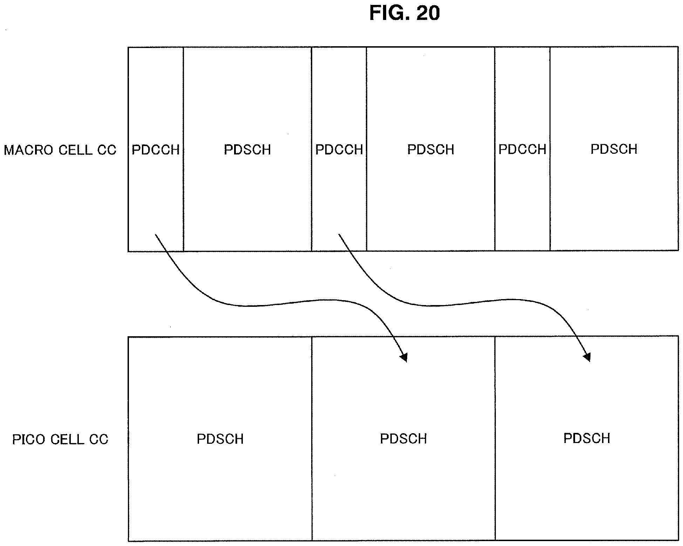

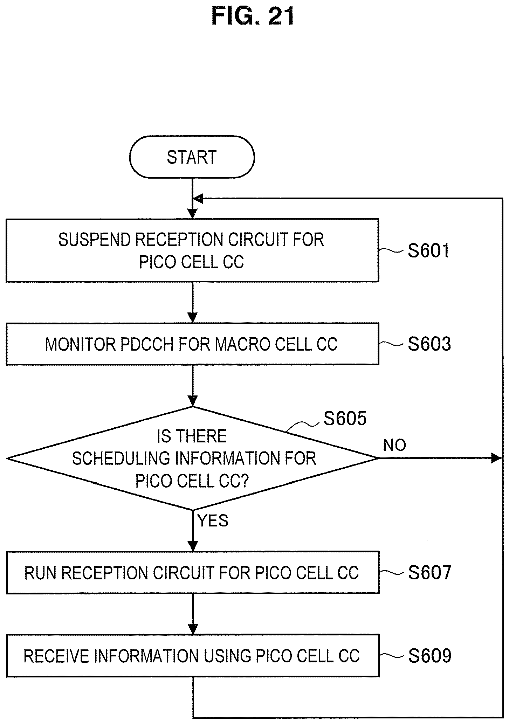

Next, the fourth modified example according to the present embodiment will be described with reference to FIGS. 20 and 21.

### <5.4.1. Overview>

In the fourth modified example, similarly to the first modified example, the cross carrier scheduling is applied in the carrier aggregation of the macro cell CC and the pico cell CC. The macro cell CC functions as the anchor point of the cross carrier scheduling. Further, particularly, in the fourth modified example, the resource assignment information (the scheduling information) of the UE 300 for the pico cell CC is transmitted in units of subframes serving as a time unit of wireless communication. Furthermore, the resource assignment information transmitted in a first subframe includes resource assignment information for downlink resources of a second subframe subsequent to the first subframe. In other words, the scheduling information transmitted using the macro cell CC includes a downlink assignment for downlink resources in a subsequent subframe rather than a downlink assignment for downlink resources in the same subframe. This point will be specifically described below with reference to FIG. 20.

FIG. 20 is an illustrative diagram for describing an example of downlink assignment information according to the fourth modified example of the present embodiment. Referring to FIG. 20, resources of the macro cell CC and the pico cell CC corresponding to 3 subframes are illustrated. In this example, the scheduling information for the pico cell CC transmitted using the macro cell CC in a certain subframe includes a downlink assignment for downlink resources in a subframe immediately after the certain subframe.

As described above, there is an offset between a subframe in which a downlink assignment is notified of and a subframe of downlink resources to be assigned. Thus, the UE 300 need not receive all information transmitted using the pico cell CC and accumulate the information in a buffer. Thus, after detecting that there are downlink resources assigned to the UE 300, the UE 300 preferably receives information through a subframe having the downlink resources. Thus, the UE 300 can suspend a reception circuit for the pico cell CC while there are no downlink resources assigned to the UE 300. Accordingly, power consumption of the UE 300 can be reduced.

### <5.4.2. Configurations of respective devices>

Next, configurations of respective devices according to the fourth modified example of the present embodiment will be described. Here, only points different from the content described above with reference to FIGS. 8, 10, and 11 will be described.

### (Macro eNodeB 100)

### - Macro cell communication control unit 151

The macro cell communication control unit 151 causes the wireless communication unit 120 to transmit the scheduling information for the pico cell CC using the macro cell CC in the first subframe. The scheduling information includes resource assignment information for downlink resources in the second subframe subsequent to the first subframe.

Further, for example, an offset between the first subframe and the second subframe is individually decided for the UE 300. In other words, the macro cell communication control unit 151 individually decides the offset for each UE. For example, the macro cell communication control unit 151 decides the offset according to the performance (for example, runtime of an RF reception circuit) of the UE 300. For example, the offset is set to be large for the UE in which the runtime of the RF reception circuit is long, and the offset is set to be small for the UE in which the runtime of the RF reception circuit is small. Through the offset of the UE individual, power consumption of the UE having various capabilities can be more reliably reduced.

Further, for example, the macro cell communication control unit 151 notifies the UE 300 of the offset through the wireless communication unit 120. More specifically, the macro cell communication control unit 151 notifies the UE 300 of the offset through RRC signaling.

### (UE 300)

### - Control unit 340

The wireless communication unit 320 receives the scheduling information for the pico cell CC using the macro cell CC in the first subframe. Then, the control unit 340 acquires the scheduling information. The scheduling information includes the resource assignment information for the downlink resources in the second subframe subsequent to the first subframe, and the control unit 340 acquires the resource assignment information for the downlink resources.

Further, for example, the offset between the first subframe and the second subframe is individually decided for the UE 300. The UE 300 is notified of the offset through the macro eNodeB 100. In this case, the control unit 340 performs wireless communication control based on the notified offset and the scheduling information for the pico cell CC.

Further, the control unit 340 suspends the reception circuit for the pico cell CC while the scheduling information for the pico cell CC is not acquired. Then, when the scheduling information for the pico cell CC is acquired, the control unit 340 runs the reception circuit.

### <5.4.3. Process flow>

Next, an example of a communication control process of the UE 300 according to the fourth modified example of the present embodiment will be described with reference to FIG. 21. FIG. 21 is a flowchart illustrating an example of a schematic flow of a communication control process of the UE 300 according to the fourth modified example of the present embodiment.

In step S601, the control unit 340 suspends the reception circuit for the pico cell CC.

In step S603, the control unit 340 monitors the PDCCH of the macro cell CC through the wireless communication unit 320. In other words, the control unit 340 monitors whether or not there is the scheduling information of the UE 300 in the search space of the UE 300.

In step S605, the control unit 340 determines whether or not there is the scheduling information for the pico cell CC of the UE 300. When there is the scheduling information, the process proceeds to step S607. Otherwise, the process returns to step S601.

In step S607, the control unit 340 runs the reception circuit for the pico cell CC.

In step S609, the wireless communication unit 320 receives information using the pico cell CC, and the control unit 340 acquires the information. Then, the process returns to step S601.

### <<<6. Conclusion>>>

The communication devices and the processes according to the embodiments of the present disclosure have been described so far with reference to FIGS. 1 to 21. According to the embodiments of the present disclosure, when the UE 300 capable of performing wireless communication using one PCC and one or more SCCs is located within the macro cell 10, wireless communication by the UE 300 is controlled. When the UE 300 is located within the macro cell 10 and the pico cell 20, the UE 300 is controlled such that one of one or more CCs for wireless communication in one of the macro cell 10 and the pico cell 20 is used as one PCC, and each of one or more CCs for wireless communication in the other is used as the SCC.

For example, one of the macro cell 10 and the pico cell 20 is the macro cell 10, and the other of the macro cell 10 and the pico cell 20 is the pico cell 20. In other words, when the UE 300 is located within the macro cell 10 and the pico cell 20, the macro cell communication control unit 151 controls the UE 300 such that one of one or more macro cell CCs for wireless communication in the macro cell 10 is used as the PCC, and each of one or more pico cell CCs for wireless communication in the pico cell 20 is used as the SCC. Further, for example, when one or more macro cell frequency bands include a plurality of macro cell frequency bands, the macro cell communication control unit 151 controls the UE 300 such that the rest of the one or more macro cell frequency bands are used as the secondary frequency band.

Through the carrier aggregation of the macro cell CC and the pico cell CC, the UE 300 can use the macro cell CC as the PCC (or the SCC) and use the pico cell CC as the SCC. Thus, the UE 300 may not perform a number of transactions (for example, dozens of transactions) for entering the RRC connected state in the corresponding CC in order to use the CC usable in the pico cell 20 as the pico cell CC of the UE 300. For example, the UE may perform acquisition of a timing advance value of a random access channel among a number of transactions that are typically performed to enter the RRC connected state and may not perform the remaining transactions. As described above, it is possible to reduce a load on the UE 300 related to wireless communication in the macro cell 10 and the pico cell 20.

Further, through the carrier aggregation of the macro cell CC and the pico cell CC, the UE 300 need not enter the RRC connected state with both the macro eNodeB 100 and the pico eNodeB 200, and thus the backward compatibility of the UE can guaranteed.

Further, through the carrier aggregation of the macro cell CC and the pico cell CC, all the pico cell CCs are used as the SCC. Furthermore, a control signal to be transmitted in the SCC is smaller than that in the PCC. Thus, the control signal to be transmitted in the pico cell CC is further reduced. As a result, the throughput of the pico cell 20 can be increased.

Further, as long as the UE 300 is located within the macro cell, even if the UE 300 moves in and out of the pico cell 20, the PCC need not be changed by the inter-frequency handover, and it is desirable to add or delete the SCC. Thus, inter-frequency handover of the PCC can be further reduced. As a result, the burden on the UE 300 is reduced.

Further, for example, none of the pico cell CCs is used as the PCC. In other words, the use of each of the pico cell CCs is limited to the use as the SCC.

Thus, the control signal to be transmitted through the pico cell CC is consistently small. As a result, the throughput of the pico cell 20 can be increased.

Further, for example, the resource assignment information (the scheduling information) for each of one or more pico cell CCs is transmitted using any one of the one or more macro cell CCs.

Thus, it is possible to remove the PDCCH in the CC used in the pico cell 20. Accordingly, the control of the pico cell 20 side can be further simplified. Further, it is desirable that the UE 300 monitor the PDCCH for the macro cell CC of the UE 300 (for example, a 2 GHz band), and the PDCCH for the pico cell CC of the UE 300 (for example, a 5 GHz band) need not be monitored. Thus, the load of the UE 300 can be reduced.

Further, for example, the resource assignment information (the scheduling information) of one or more pico cell CCs of the UE 300 is transmitted using any one of the macro cell CCs of the UE 300. In this case, the pico cell CC identification information (that is, the N-CIF) indicating any one of the CC usable in the pico cell 20 serving as the target of the resource assignment information is also transmitted using the corresponding CC. Further, the UE 300 is notified that the pico cell band identification information (that is, the N-CIF) is transmitted using any one of the macro cell CCs.

As a result, the UE 300 can detect that the CIF to be transmitted is the N-CIF (that is, that the CIF to be transmitted designates the CC used in the pico cell 20). Thus, the number of bits of the CIF need not be increased. Accordingly, the radio resources can be effectively used, and the backward compatibility can be also guaranteed.

Further, for example, when the N-CIF is transmitted using any one of the macro cell CCs, the macro cell CC identification information (that is, the L-CIF) indicating any one CC of the frequency bands usable in the macro cell 1 0 that serves as the target of the resource assignment information of the UE 300 is not transmitted using any one of the macro cell CCs. More specifically, when the N-CIF is transmitted using any one of the macro cell CCs, the N-CIF is included in the control information for the UE 300 that is transmitted using any one of the macro cell CCs. Further, when the N-CIF is included in the control information for the UE 300 that is transmitted using any one of the macro cell CCs, the L-CIF is not included in the control information.

If the N-CIF for the UE 300 and the L-CIF for the UE 300 are transmitted through the same macro cell CC (more specifically, the same DCI), the UE 300 has to distinguish the L-CIF from the N-CIF. However, as described above, when the N-CIF for the UE 300 and the L-CIF for the UE 300 are not transmitted through the same macro cell CC (more specifically, the same DCI), the UE 300 need not distinguish the CIFs from each other. Thus, since it is unnecessary to newly set a bit used for the distinguishing, the radio resources can be effectively used, and the backward compatibility can be also guaranteed.

Further, for example, the resource assignment information (the scheduling information) for the pico cell CC is transmitted through the extension portion of the physical downlink control channel. More specifically, for example, the extension portion of the physical downlink control channel is the ePDCCH.

Thus, the depletion of the PDCCH can be prevented. In other words, when one macro cell CC functions as the anchor point of a number of pico cell CCs, the macro eNodeB 100 transmits the scheduling information of a number of pico cell CCs using the one macro cell CC. In this case, the scheduling information is considered to be difficult to transmit through only the PDCCH. Thus, by transmitting the scheduling information using the ePDCCH as well as the PDCCH, it is possible to transmit the scheduling information of a number of pico cell CCs.

Further, for example, the resource assignment information (the scheduling information) of the UE 300 for the pico cell CC is transmitted in units of subframes serving as a time unit of wireless communication. Furthermore, the resource assignment information transmitted in the first subframe includes the resource assignment information for the downlink resources of the second subframe subsequent to the first subframe.

Thus, there is an offset between a subframe in which a downlink assignment is notified of and a subframe of downlink resources to be assigned. Thus, the UE 300 need not receive all information transmitted using the pico cell CC and accumulate the information in a buffer. Thus, after detecting that there are downlink resources assigned to the UE 300, the UE 300 preferably receives information through a subframe having the downlink resources. Thus, the UE 300 can suspend a reception circuit for the pico cell CC while there are no downlink resources assigned to the UE 300. Accordingly, power consumption of the UE 300 can be reduced.

Further, for example, the offset between the first subframe and the second sub frame is individually decided for the UE 300.

Thus, power consumption of the UE having various capabilities can be more reliably reduced.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

The example in which there is one pico cell within the macro cell has been described as an example, but the present disclosure is not limited to this example. There may be a plurality of pico cells within the macro cell.

In addition, although the example in which a CC used in a macro cell is a frequency band of the 2 MHz band and a frequency band used in a pico cell is a frequency band of the 5 GHz band has been described as an example, the present disclosure is not limited thereto. For example, a frequency band of the same band (for example, the 2 GHz band) may be used in both of a macro cell and a pico cell.In this case, the CC used in the macro cell and the CC used in the pico cell may be fixedly distinguished or may be switched according to a time.

Further, the example in which a plurality of CCs can be used in each of the macro cell and the pico cell has been described, but the present disclosure is not limited to this example. Only one frequency band may be used in either or both of the macro cell and the pico cell. As one example, the frequency band usable in the pico cell may be one frequency band. In this case, even when only one frequency band usable in the pico cell is secured, the mechanism of the present disclosure can be applied. As another example, the frequency band usable in the pico cell may be one frequency band, and the frequency band usable in the macro cell may be one frequency band as well. In this case, the carrier aggregation of one frequency band usable in the macro cell and one frequency band usable in the pico cell may be performed.

Further, when a plurality of CCs can be used in the pico cell, the carrier aggregation (that is, the carrier aggregation in pico cell units) of two or more CCs among the plurality of CCs may be performed, or the carrier aggregation may not be performed. Similarly, when a plurality of CCs can be used in the macro cell, the carrier aggregation (that is, the carrier aggregation in macro cell units) of two or more CCs among the plurality of CCs may be performed, or the carrier aggregation may not be performed.

Further, the UE may or may not perform communication with the pico eNodeB without performing communication with the macro eNodeB.

Further, the content of the wireless communication control in connection with one UE has been described, but naturally, the present disclosure is not limited to this example. A plurality of UEs may perform communication in the macro cell and the pico cell.

Further, the example in which each of the CCs used in the pico cell is used as the SCC, and one of the CCs used in the macro cell is used as the PCC has been described, but the present disclosure is not limited to this example. For example, one of the CCs used in the pico cell may be used as the PCC, and each of the CCs used in the macro cell may be used as the SCC.

In addition, although the example in which the macro cell eNodeB and the pico cell eNodeB perform wired communication has been described, the present disclosure is not limited thereto. Instead of wired communication, wireless communication (for example, microwave communication) may be performed.

Further, the example in which the pico eNodeB is the RRH has been described, but the present disclosure is not limited to this example. The pico eNodeB may have the same function as a common eNodeB. For example, the pico cell communication control unit that has been described as the component of the macro eNodeB may be equipped in the pico eNodeB.

In addition, the macro eNodeB may be configured by a plurality of devices rather than one device. For example, the macro eNodeB may include a communication control device that includes at least a control unit as one of the plurality of devices. Further, the macro cell communication control unit and the pico cell communication control unit of the control unit may be equipped within different communication control devices.

Further, the example of the wireless communication system complying with LTE-A has been described, but the present disclosure is not limited to this example. The technique according to the present disclosure can be applied even to a wireless communication system according to a different communication standard that performs wireless communication control similar to the carrier aggregation. Similarly, the eNodeB and the UE have been described as the examples of the base station and the terminal device, but the present disclosure is not limited to these examples. The technique according to the present disclosure can be applied even to a base station and a terminal device that comply with a different communication standard. Further, the example of the frequency bands used in the macro cell and the pico cell has been described, but the present disclosure is not limited to this example. The technique according to the present disclosure can be applied to an arbitrary frequency band. Similarly, the PCC and the SCC have been described as the examples of the primary frequency band and the secondary frequency band, but the present disclosure is not limited to these examples. The technique according to the present disclosure can be applied to an arbitrary primary frequency band and an arbitrary secondary frequency band.

In addition, although the example in which a small cell that is partially or entirely overlapped by a macro cell is a pico cell has been described, the present disclosure is not limited thereto. The small cell may be, for example, a femto cell, a nano cell, or a micro cell.

Also, the processing steps in a communication control process in this specification are not strictly limited to being executed in a time series following the sequence described in a flowchart. For example, the processing steps in a communication control process may be executed in a sequence that differs from a sequence described herein as a flowchart, and furthermore may be executed in parallel.

In addition, it is possible to create a computer program for causing hardware such as a CPU, ROM, and RAM built into a communication control device to exhibit functions similar to each structural element of the foregoing communication control device. Also, a storage medium having such a computer program stored therein is also provided.

Additionally, the present technology may also be configured as below.
(1) A communication control device including:
   a control unit configured to control wireless communication by a terminal device capable of performing wireless communication using one primary frequency band and one or more secondary frequency bands when the terminal device is located within a macro cell,
   wherein, when the terminal device is located within a small cell overlapped by the macro cell partially or entirely and the macro cell, the control unit controls the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.
(2) The communication control device according to (1),
   wherein one of the macro cell and the small cell is the macro cell,
   wherein the other of the macro cell and the small cell is the small cell, and
   wherein, when the terminal device is located within the small cell and the macro cell, the control unit controls the terminal device in a manner that one of one or more macro cell frequency bands for wireless communication in the macro cell is used as the primary frequency band, and each of one or more small cell frequency bands for wireless communication in the small cell is used as the secondary frequency band.
(3) The communication control device according to (2),
   wherein none of the one or more small cell frequency bands is used as the primary frequency band.
(4) The communication control device according to (2) or (3),
   wherein, when the one or more macro cell frequency bands include a plurality of macro cell frequency bands, the control unit controls the terminal device in a manner that the rest of the one or more macro cell frequency bands are used as the secondary frequency band.
(5) The communication control device according to any one of (2) to (4),
   wherein resource assignment information for each of the one or more small cell frequency bands is transmitted using any one macro cell frequency band among the one or more macro cell frequency bands.
(6) The communication control device according to (5),
   wherein, when the resource assignment information is transmitted using the any one macro cell frequency band, small cell band identification information indicating any one frequency band among frequency bands usable in the small cell that serves as a target of the resource assignment information is also transmitted using the any one macro cell frequency band, and
   wherein the terminal device is notified that the small cell band identification information is transmitted using the any one macro cell frequency band.
(7) The communication control device according to (6),
   wherein, when the small cell band identification information is transmitted using the any one macro cell frequency band, macro cell band identification information indicating any one frequency band among frequency bands usable in the macro cell that serves as a target of resource assignment information of the terminal device is not transmitted using the any one macro cell frequency band.
(8) The communication control device according to (7),
   wherein, when the small cell band identification information is transmitted using the any one macro cell frequency band, the small cell band identification information is included in control information for the terminal device that is transmitted using the any one macro cell frequency band, and
   wherein, when the small cell band identification information is included in the control information for the terminal device, the macro cell band identification information is not included in the control information.
(9) The communication control device according to any one of (5) to (8),
   wherein the resource assignment information is transmitted through an extension portion of a physical downlink control channel.
(10) The communication control device according to (9),
   wherein the extension portion of the physical downlink control channel is an enhanced physical downlink control channel (ePDCCH).
(11) The communication control device according to any one of (5) to (10),
   wherein the resource assignment information is transmitted in units of subframes serving as a time unit of wireless communication, and
   wherein the resource assignment information transmitted in a first subframe includes resource assignment information for downlink resources in a second subframe subsequent to the first subframe.
(12) The communication control device according to (11),
   wherein an offset between the first subframe and the second subframe is individually decided for the terminal device.
(13) The communication control device according to any one of (1) to (12),
   wherein a frequency band used in the small cell is higher than a frequency band used in the macro cell.
(14) The communication control device according to any one of (1) to (13),
   wherein the one primary frequency band and the one or more secondary frequency bands are used in a carrier aggregation.
(15) The communication control device according to (14),
   wherein the one primary frequency band is one primary component carrier, and
   wherein the one or more secondary frequency bands are one or more secondary component carriers.
(16) The communication control device according to any one of (1) to (15),
   wherein the frequency bands usable in the small cell are one frequency band.
(17) A program for causing a computer to function as:
   a control unit configured to control wireless communication by a terminal device capable of performing wireless communication using one primary frequency band and one or more secondary frequency bands when the terminal device is located within a macro cell,
   wherein, when the terminal device is located within a small cell overlapped by the macro cell partially or entirely and the macro cell, the control unit controls the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.
(18) A communication control method including:
   controlling wireless communication by a terminal device capable of performing wireless communication using one primary frequency band and one or more secondary frequency bands when the terminal device is located within a macro cell,
   wherein the controlling of the wireless communication by the terminal device includes, when the terminal device is located within a small cell overlapped by the macro cell partially or entirely and the macro cell, controlling the terminal device in a manner that one of one or more frequency bands for wireless communication in one of the macro cell and the small cell is used as the primary frequency band, and each of one or more frequency bands for wireless communication in the other of the macro cell and the small cell is used as the secondary frequency band.
(19) A communication control device including:
   a control unit configured to control wireless communication in a small cell overlapped by a macro cell partially or entirely by a terminal device capable of performing wireless communication using one primary frequency band and one or more secondary frequency bands when the terminal device is located within the small cell,
   wherein the control unit
      controls the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or
      controls the terminal device in a manner that, when the terminal device is located within the macro cell and the small cell and each of the one or more macro cell frequency bands is used as the secondary frequency band, one of the one or more small cell frequency bands is used as the primary frequency band.
(20) A program for causing a computer to function as:
   a control unit configured to control wireless communication in a small cell overlapped by a macro cell partially or entirely by a terminal device capable of performing wireless communication using one primary frequency band and one or more secondary frequency bands when the terminal device is located within the small cell,
   wherein the control unit
      controls the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or
      controls the terminal device in a manner that, when the terminal device is located within the macro cell and the small cell and each of the one or more macro cell frequency bands is used as the secondary frequency band, one of the one or more small cell frequency bands is used as the primary frequency band.
(21) A communication control method including:
   controlling wireless communication in a small cell overlapped by a macro cell partially or entirely by a terminal device capable of performing wireless communication using one primary frequency band and one or more secondary frequency bands when the terminal device is located within the small cell,
   wherein the controlling of the wireless communication by the terminal device includes
      controlling the terminal device in a manner that, when the terminal device is located within the macro cell and the small cell and uses one of one or more macro cell frequency bands for wireless communication in the macro cell as the primary frequency band, each of one or more small cell frequency bands for wireless communication in the small cell is used as the secondary frequency band, or
      controlling the terminal device in a manner that, when the terminal device is located within the macro cell and the small cell and each of the one or more macro cell frequency bands is used as the secondary frequency band, one of the one or more small cell frequency bands is used as the primary frequency band.
(22) A terminal device including:
   a wireless communication unit configured to perform wireless communication in a macro cell using one or more macro cell frequency bands for wireless communication in the macro cell and perform wireless communication in a small cell overlapped by the macro cell partially or entirely using one or more small cell frequency bands for wireless communication in the small cell; and
   a control unit configured to use one of one of the one or more macro cell frequency bands and the one or more small cell frequency bands as a primary frequency band and use each of one of the one or more macro cell frequency bands and the one or more small cell frequency bands as a secondary frequency band.
(23) A communication control method including:
   performing wireless communication in a macro cell using one or more macro cell frequency bands for wireless communication in the macro cell;
   performing wireless communication in a small cell overlapped by the macro cell partially or entirely using one or more small cell frequency bands for wireless communication in the small cell; and
   using one of one of the one or more macro cell frequency bands and the one or more small cell frequency bands as a primary frequency band and using each of one of the one or more macro cell frequency bands and the one or more small cell frequency bands as a secondary frequency band.

### Reference Signs List

- 10: macro cell
- 20: pico cell
- 100: macro eNodeB
- 110: antenna unit
- 120: wireless communication unit
- 130: network control unit
- 140: storage unit
- 150: control unit
- 151: macro cell communication control unit
- 153: pico cell communication control unit
- 200: pico eNodeB
- 210: antenna unit
- 220: wireless communication unit
- 230: network control unit
- 240: storage unit
- 250: control unit
- 300: pico eNodeB
- 310: antenna unit
- 320: wireless communication unit
- 330: storage unit
- 340: control unit

## Claims

1. A communication control device (100) comprising:
a control unit (150) configured to control wireless communication by a terminal device capable of performing wireless communication using one primary frequency band and one or more secondary frequency bands when the terminal device (300) is located within a macro cell (10),
wherein, when the terminal device (300) is located within the macro cell (10) and a small cell (20) overlapped by the macro cell (10) partially or entirely , the control unit (150) controls the terminal device (300) in a manner that one of one or more frequency bands for wireless communication in the macro cell (10) is used as the primary frequency band, and each of one or more frequency bands for wireless communication in the small cell (20) is used as the secondary frequency band,
wherein a frequency band used in the small cell (20) is higher than a frequency band used in the macro cell (10);
wherein the one primary frequency band and the one or more secondary frequency bands are used in a carrier aggregation wherein the one primary frequency band is one primary component carrier,
wherein the one or more secondary frequency bands are one or more secondary component carriers;
wherein resource assignment information for each of the one or more small cell (20) frequency bands is transmitted using any one macro cell (10) frequency band among the one or more macro cell (10) frequency bands;
wherein, when the resource assignment information is transmitted using the any one macro cell frequency band, small cell band identification information indicating any one frequency band among frequency bands usable in the small cell (20) that serves as a target of the resource assignment information is also transmitted using the any one macro cell frequency band, and
wherein the terminal device (300) is notified that the small cell band identification information is transmitted using the any one macro cell frequency band.

2. The communication control device according to claim 1,
wherein one of the macro cell (10) and the small cell (20) is the macro cell (10),
wherein the other of the macro cell (10) and the small cell (20) is the small cell (20), and
wherein, when the terminal device (300) is located within the small cell (20) and the macro cell (10), the control unit controls (150) the terminal device (300) in a manner that one of one or more macro cell frequency bands for wireless communication in the macro cell is used as the primary frequency band, and each of one or more small cell (20) frequency bands for wireless communication in the small cell (20) is used as the secondary frequency band.

3. The communication control device according to claim 1, wherein the resource assignment information is transmitted through an extension portion of a physical downlink control channel.

4. The communication control device according to claim 1,
wherein the frequency bands usable in the small cell (20) are one frequency band.

5. A communication control method comprising:
controlling wireless communication by a terminal device (300) capable of performing wireless communication using one primary frequency band and one or more secondary frequency bands when the terminal device (300) is located within a macro cell (10),
wherein the controlling of the wireless communication by the terminal device (300) includes, when the terminal device (300) is located within the macro cell (10) and a small cell (20) overlapped by the macro cell (10) partially or entirely , controlling the terminal device (300) in a manner that one of one or more frequency bands for wireless communication in the macro cell (10) is used as the primary frequency band, and each of one or more frequency bands for wireless communication in the small cell is used as the secondary frequency band,
wherein a frequency band used in the small cell (20) is higher than a frequency band used in the macro cell (10);
wherein the one primary frequency band and the one or more secondary frequency bands are used in a carrier aggregation wherein the one primary frequency band is one primary component carrier,
wherein the one or more secondary frequency bands are one or more secondary component carriers;
wherein resource assignment information for each of the one or more small cell (20) frequency bands is transmitted using any one macro cell (10) frequency band among the one or more macro cell (10) frequency bands;
wherein, when the resource assignment information is transmitted using the any one macro cell frequency band, small cell band identification information indicating any one frequency band among frequency bands usable in the small cell (20) that serves as a target of the resource assignment information is also transmitted using the any one macro cell frequency band, and
wherein the terminal device (300) is notified that the small cell band identification information is transmitted using the any one macro cell frequency band.

6. A program for causing a control unit (150) to carry out the method as defined in claim 5.

## Patentansprüche

1. Kommunikationssteuervorrichtung (100), die Folgendes umfasst:
eine Steuereinheit (150), die konfiguriert ist, eine drahtlose Kommunikation durch ein Endgerät, das eine drahtlose Kommunikation unter Verwendung eines primären Frequenzbandes und eines oder mehrerer sekundärer Frequenzbänder durchführen kann, zu steuern, wenn sich das Endgerät (300) in einer Makrozelle (10) befindet, wobei
dann, wenn sich das Endgerät (300) in der Makrozelle (10) und in einer Kleinzelle (20), die mit der Makrozelle (10) teilweise oder ganz überlappt, befindet, die Steuereinheit (150) das Endgerät (300) in der Weise steuert, dass eines von einem oder mehreren Frequenzbändern zur drahtlosen Kommunikation in der Makrozelle (10) als das primäre Frequenzband verwendet wird und jedes von dem einen oder den mehreren Frequenzbändern zur drahtlosen Kommunikation in der Kleinzelle (20) als das sekundäre Frequenzband verwendet wird,
ein Frequenzband, das in der Kleinzelle (20) verwendet wird, höher als ein Frequenzband, das in der Makrozelle (10) verwendet wird, ist;
das eine primäre Frequenzband und das eine oder die mehreren sekundären Frequenzbänder in einer Trägerzusammenfassung verwendet werden, wobei das eine primäre Frequenzband ein primärer Komponententräger ist, wobei
das eine oder die mehreren sekundären Frequenzbänder ein oder mehrere sekundäre Komponententräger sind und
die Betriebsmittelzuordnungsinformationen für jedes des einen oder der mehreren Frequenzbänder für Kleinzellen (20) unter Verwendung eines beliebigen Frequenzbands für Makrozellen (10) unter dem einen oder den mehreren Frequenzbändern für Makrozellen (10) gesendet werden;
dann, wenn die Betriebsmittelzuweisungsinformationen unter Verwendung des Frequenzbandes für Makrozellen gesendet werden, auch Identifizierungsinformationen für Kleinzellen, die ein Frequenzband unter Frequenzbändern, die in der Kleinzelle (20), die als ein Ziel der Betriebsmittelzuweisungsinformationen dient, verwendet werden können, anzeigen, unter Verwendung des einen Frequenzbandes für Makrozellen gesendet wird, und
das Endgerät (300) darüber informiert wird, dass die Bandidentifizierungsinformationen für Kleinzellen unter Verwendung des einen Frequenzbandes für Makrozellen gesendet werden.

2. Kommunikationssteuervorrichtung nach Anspruch 1, wobei
eine der Makrozelle (10) und der Kleinzelle (20) die Makrozelle (10) ist,
die andere der Makrozelle (10) und der Kleinzelle (20) die Kleinzelle (20) ist und
dann, wenn sich das Endgerät (300) in der Kleinzelle (20) und der Makrozelle (10) befindet, die Steuereinheit das Endgerät (300) in einer Weise steuert (150), dass eines des einen oder der mehreren Frequenzbänder für Makrozellen für drahtlose Kommunikation in der Makrozelle als das primäre Frequenzband verwendet wird und jedes des einen oder der mehreren Frequenzbänder für Kleinzellen (20) für drahtlose Kommunikation in der Kleinzelle (20) als das sekundäre Frequenzband verwendet wird.

3. Kommunikationssteuervorrichtung nach Anspruch 1, wobei
die Betriebsmittelzuweisungsinformationen über einen Erweiterungsabschnitt eines physischen Abwärtsstreckensteuerkanals gesendet werden.

4. Kommunikationssteuervorrichtung nach Anspruch 1, wobei
die Frequenzbänder, die in den Kleinzellen (20) verwendet werden können, ein Frequenzband sind.

5. Kommunikationssteuerverfahren, das Folgendes umfasst:
Steuern einer drahtlosen Kommunikation durch ein Endgerät (300), das eine drahtlose Kommunikation unter Verwendung eines primären Frequenzbandes und eines oder mehrerer sekundärer Frequenzbänder durchführen kann, wenn sich das Endgerät (300) in einer Makrozelle (10) befindet, wobei
das Steuern der drahtlosen Kommunikation durch das Endgerät (300) dann, wenn sich das Endgerät (300) in der Makrozelle (10) und einer Kleinzelle (20), die mit der Makrozelle (10) teilweise oder ganz überlappt, befindet, ein Steuern des Endgeräts (300) in der Weise, dass eines von einem oder mehreren Frequenzbändern zur drahtlosen Kommunikation in der Makrozelle (10) als das primäre Frequenzband verwendet wird und jedes von dem einen oder den mehreren Frequenzbändern zur drahtlosen Kommunikation in der Kleinzelle als das sekundäre Frequenzband verwendet wird, umfasst,
ein Frequenzband, das in der Kleinzelle (20) verwendet wird, höher als ein Frequenzband, das in der Makrozelle (10) verwendet wird, ist;
das eine primäre Frequenzband und das eine oder die mehreren sekundären Frequenzbänder in einer Trägerzusammenfassung verwendet werden, wobei das eine primäre Frequenzband ein primärer Komponententräger ist,
das eine oder die mehreren sekundären Frequenzbänder ein oder mehrere sekundäre Komponententräger sind;
Betriebsmittelzuordnungsinformationen für jedes des einen oder der mehreren Frequenzbänder für Kleinzellen (20) unter Verwendung eines beliebigen Frequenzbands für Makrozellen (10) unter dem einen oder den mehreren Frequenzbändern für Makrozellen (10) gesendet werden;
dann, wenn die Betriebsmittelzuweisungsinformationen unter Verwendung des Frequenzbandes für Makrozellen gesendet werden, auch Identifizierungsinformationen für Kleinzellen, die ein Frequenzband unter Frequenzbändern, die in der Kleinzelle (20), die als ein Ziel der Betriebsmittelzuweisungsinformationen dient, verwendet werden können, anzeigen, unter Verwendung des einen Frequenzbandes für Makrozellen gesendet wird, und
das Endgerät (300) darüber informiert wird, dass die Bandidentifizierungsinformationen für Kleinzellen unter Verwendung des einen Frequenzbandes für Makrozellen gesendet werden.

6. Programm, um zu bewirken, dass eine Steuereinheit (150) das Verfahren nach Anspruch 5 ausführt.

## Revendications

1. Dispositif de commande de communication (100) comprenant :
une unité de commande (150) configurée pour commander une communication sans fil par le biais d'un dispositif terminal pouvant exécuter une communication sans fil au moyen d'une bande de fréquences principale et d'une ou plusieurs bandes de fréquence secondaires lorsque le dispositif terminal (300) est situé à l'intérieur d'une macrocellule (10),
dans lequel, lorsque le dispositif terminal (300) est situé à l'intérieur de la macrocellule (10) et d'une petite cellule (20) chevauchée par la macrocellule (10) en partie ou entièrement, l'unité de commande (150) commande le dispositif terminal (300) de manière à ce qu'une ou plusieurs bandes de fréquences pour une communication sans fil dans la macrocellule (10) soient utilisées comme bande de fréquences principale, et que chacune de la ou des bandes de fréquence pour la communication sans fil dans la petite cellule (20) soit utilisée comme bande de fréquences secondaire,
dans lequel une bande de fréquences utilisée dans la petite cellule (20) est supérieure à une bande de fréquences utilisée dans la macrocellule (10) ;
dans lequel la bande de fréquences principale et la ou les bandes de fréquences secondaires sont utilisées dans une agrégation de porteuse dans laquelle la bande de fréquence principale est une porteuse de composantes principale ;
dans lequel la ou les bandes de fréquence secondaires sont une ou plusieurs porteuses de composantes secondaires ;
dans lequel des informations d'attribution de ressource pour chacune de la ou des bandes de fréquences de petite cellule (20) sont transmises au moyen d'une quelconque bande de fréquences de macrocellule (10) parmi la ou les bandes de fréquences de macrocellule (10) ;
dans lequel, lorsque les informations d'attribution de ressource sont transmises au moyen d'une quelconque bande de fréquences de macrocellule, des informations d'identification de bande de petite cellule indiquant une bande de fréquences quelconque parmi les bandes de fréquences utilisables dans la petite cellule (20) qui servent de cible des informations d'attribution de ressource, sont également transmises au moyen d'une quelconque bande de fréquences de macrocellule, et
dans lequel le dispositif terminal (300) se voit notifier que les informations d'identification de bande de petite cellule sont transmises au moyen de la quelconque bande de fréquences de macrocellule.

2. Dispositif de commande de communication selon la revendication 1,
dans lequel l'une de la macrocellule (10) et de la petite cellule (20) est la macrocellule (10),
dans lequel l'autre de la macrocellule (10) et de la petite cellule (20) est la petite cellule (20), et
dans lequel, lorsque le dispositif terminal (300) est situé à l'intérieur de la petite cellule (20) et de la macrocellule (10), l'unité de commande (150) commande le dispositif terminal (300) de manière à ce que l'une des une ou plusieurs bandes de fréquences de la macrocellule pour une communication sans fil dans la macrocellule soit utilisée comme bande de fréquences principale, et que chacune d'une ou plusieurs bandes de fréquences de la petite cellule (20) pour une communication sans fil dans la petite cellule (20) soit utilisée comme bande de fréquences secondaire.

3. Dispositif de commande de communication selon la revendication 1,
dans lequel les informations d'attribution de ressource sont transmises par l'intermédiaire d'une partie d'extension d'un canal de commande de liaison descendante physique.

4. Dispositif de commande de communication selon la revendication 1,
dans lequel les bandes de fréquences utilisables dans la petite cellule (20) sont une unique bande de fréquences.

5. Procédé de commande de communication, comprenant :
la commande d'une communication sans fil par un dispositif terminal (300) pouvant exécuter une communication sans fil au moyen d'une bande de fréquences principale et d'une ou plusieurs bandes de fréquences secondaires lorsque le dispositif terminal (300) est situé à l'intérieur d'une macrocellule (10),
dans lequel la commande de la communication sans fil par le dispositif terminal (300) inclut, lorsque le dispositif terminal (300) est situé à l'intérieur de la macrocellule (10) et d'une petite cellule (20) chevauchée par la macrocellule (10) en partie ou entièrement, la commande du dispositif terminal (300) de manière à ce qu'une ou plusieurs bandes de fréquences pour la communication sans fil dans la macrocellule (10) soient utilisées comme bande de fréquences principale, et que chacune de la ou des bandes de fréquences pour la communication sans fil dans la petite cellule soit utilisée comme bande de fréquences secondaire,
dans lequel une bande de fréquences utilisée dans la petite cellule (20) est supérieure à une bande de fréquences utilisée dans la macrocellule (10) ;
dans lequel la bande de fréquences principale et la ou les bandes de fréquences secondaires sont utilisées dans une agrégation de porteuses dans laquelle la bande de fréquences principale est une porteuse de composantes principale,
dans lequel la ou les bandes de fréquences secondaires sont une ou plusieurs porteuses de composantes secondaires ;
dans lequel des informations d'attribution de ressource pour chacune de la ou des bandes de fréquences de petite cellule (20) sont transmises au moyen d'une quelconque bande de fréquences de macrocellule (10) parmi la ou les bandes de fréquences de macrocellule (10) ;
dans lequel, lorsque les informations d'attribution de ressource sont transmises au moyen d'une quelconque bande de fréquences de macrocellule, des informations d'identification de bande de petite cellule indiquant une quelconque bande de fréquences parmi les bandes de fréquences utilisables dans la petite cellule (20) qui servent de cible des informations d'attribution de ressource sont également transmises au moyen de l'une quelconque bande de fréquences de macrocellule, et
dans lequel le dispositif terminal (300) se voit notifier que les informations d'identification de bande de petite cellule sont transmises au moyen de la quelconque bande de fréquences de macrocellule.

6. Programme destiné à amener une unité de commande (150) à exécuter le procédé tel que défini selon la revendication 5.
